# EUROPEAN PATENT APPLICATION

(11) **EP 4 293 051 A1**
(43) Date of publication of application: **20.12.2023**
(21) Application number: 22759598.0
(22) Date of filing: 21.02.2022
(51) Int. Cl.: C08F 2/46, C08F 2/44, C08F 292/00, G02B 1/04

(54) **PHOTOCURABLE LIQUID COMPOSITION, CURED OBJECT, AND METHOD FOR PRODUCING CURED OBJECT**

(30) Priority: 24.02.2021 JP 2021027632
(71) Applicant: TOKYO OHKA KOGYO CO., LTD., Kawasaki-shi, Kanagawa 211 0012 (JP)
(72) Inventor: IJIMA Yoichiro, Kawasaki-shi, Kanagawa 211-0012 (JP); CHISAKA Hiroki, Kawasaki-shi, Kanagawa 211-0012 (JP); MISUMI Koichi, Kawasaki-shi, Kanagawa 211-0012 (JP); URAKAWA Kazuki, Kawasaki-shi, Kanagawa 211-0012 (JP)
(74) Representative: Plasseraud IP
(86) International application number: PCT/JP2022/007035
(87) International publication number: WO 2022/181562

(57) **Abstract**

The present invention provides a photocurable liquid composition capable of forming a cured product in which localization of metal oxide nanoparticles is suppressed, a cured product of the photocurable liquid composition, and a method for producing a cured product using the photocurable liquid composition. As a photopolymerizable monomer (A), a polyfunctional monomer (A1) having 3 or more ethylenically unsaturated double bond is added to the photocurable liquid composition including the photopolymerizable monomer (A), metal oxide nanoparticles (B), and a photopolymerization initiator (C).

## Description

### TECHNICAL FIELD

The present invention relates to a photocurable liquid composition, a cured product of the photocurable liquid composition, and a method for producing the cured product using the above photocurable liquid composition.

### BACKGROUND ART

A highly refractive material has been used to form an optical component. For example, a composition in which metal oxide particles such as titanium dioxide and zirconium oxide are dispersed in an organic component is used as highly refractive material. As a composition to form such a highly refractive material, an energy ray-curable composition including a metal oxide (A) having a specific diameter, a (meth)acrylate (B), and a photopolymerization initiator (C) has been proposed (see Patent Document 1).

Patent Document 1: Japanese Unexamined Patent Application, Publication No. 2017-214465

### DISCLOSURE OF THE INVENTION

### Problems to be Solved by the Invention

However, the formation of high refractive index material by curing a composition as described in the Patent Document 1 including a metal oxide (A), and a polymerizable monomer having an ethylenically unsaturated double bond such as (meth)acrylate (B) has a problem that a part rich in the metal oxide (A) and a part including little metal oxide (A) are separated, making it to form a uniform cured product. More specifically, when the composition described in the Patent Document 1 is cured to form a cured film, in the cured film, phase separation between a layer rich in metal oxide (A) and a layer including little metal oxide (A) tends to occur.

The present invention has been made in view of the above-mentioned problem. An object of the present invention is to provide a photocurable liquid composition capable of forming a cured product in which localization of metal oxide nanoparticles is suppressed, a cured product of the photocurable liquid composition, and a method for producing a cured product using the photocurable liquid composition. Means for Solving the Problems

The present inventors have found that the above-mentioned problems can be solved by adding a polyfunctional monomer (A1) having 3 or more ethylenically unsaturated double bonds as a photopolymerizable monomer (A) to a photocurable liquid composition including the photopolymerizable monomer (A), metal oxide nanoparticles (B), and a photopolymerization initiator (C), and accomplished the present invention. More specifically, the invention provides following.

A first aspect of the present invention relates to a photocurable liquid composition including a photopolymerizable monomer (A), metal oxide nanoparticles (B), and a photopolymerization initiator (C),
in which the photopolymerizable monomer has an ethylenically unsaturated double bond, and
the photopolymerizable monomer (A) comprises a polyfunctional monomer (A1) having 3 or more ethylenically unsaturated double bonds.

A second aspect of the present invention relates to a cured product of the photocurable liquid composition according to the first aspect.

A third aspect of the present invention relates to method for producing a cured product comprising,
shaping the photocurable liquid composition according to the first aspect, and
exposing the shaped photocurable liquid composition.

### Effects of the Invention

The present invention can provide a photocurable liquid composition capable of forming a cured product in which localization of metal oxide nanoparticles is suppressed, a cured product of the photocurable liquid composition, and a method for producing a cured product using the photocurable liquid composition.

### PREFERRED MODE FOR CARRYING OUT THE INVENTION

### <<Photocurable liquid composition>>

A photocurable liquid composition includes a photopolymerizable monomer (A), metal oxide particles (B), and a photopolymerization initiator (C). The photopolymerizable monomer (A) includes a polyfunctional monomer (A1) having 3 or more ethylenically unsaturated double bond. By adding the polyfunctional monomer (A1) having 3 or more ethylenically unsaturated double bond as the photopolymerizable monomer (A) to the photocurable liquid composition including the photopolymerizable monomer (A), the metal oxide nanoparticles (B), and the photopolymerization initiator (C), localization of the metal oxide nanoparticles (B) in a cured product of the photocurable liquid composition is suppressed.

It should be noted that, in the present claims and the specification, "(meth)acrylate" means both acrylate and methacrylate. In the present claims and the specification, "(meth)acrylic" means both acrylic and methacrylic. In the present claims and the specification, "(meth)acryloyl" means both acryloyl and methacryloyl.

The photocurable liquid composition may include a solvent (S). In view of suppressing strength reduction of the cured product due to the solvent (S) in the formation of the cured product, the photocurable liquid composition preferably includes a small amount of the solvent (S) or no solvent (S). A content of the solvent (S) in the photocurable liquid composition is preferably 5 % by mass or less, more preferably 2 % by mass or less, further preferably 1 % by mass or less, particularly preferably 0.5 % by mass or less, and most preferably 0.3 % by mass or less. A lower limit of the content of the solvent (S) in the photocurable liquid composition is not particularly limited, and preferably 0 % by mass or more. It is particularly preferred that the photocurable liquid composition substantially includes no solvent (S). Inclusion of substantially no solvent (S) in the photocurable liquid composition means that no solvent (S) is intentionally added to the photosensitive ink composition, other than a very small amount of solvent (S) unavoidably brought into the photocurable liquid composition with the raw materials. When the photocurable liquid composition substantially includes no solvent (S), a content of the solvent (S) in the photocurable liquid composition is for example 0.2 % by mass or less, preferably 0.15 % by mass or less, more preferably 0.1 % by mass or less, and further preferably 0.05 % by mass or less.

The viscosity of the photocurable liquid composition is preferably 70 cP or lower, more preferably 60 cP or lower, and further preferably 50 cP or lower as a viscosity measured at 25 °C with an E type viscometer. The viscosity of the photocurable liquid composition can be adjusted by, for example, adjusting a content of a plasticizer (D), adjusting a content of the photopolymerizable monomer (A) or metal compound particles (B), or adding a small amount of the solvent (S) to the photocurable liquid composition.

Hereinafter, essential or optional components that can be included in the photocurable liquid composition are described.

### <Photopolymerizable monomer (A)>

The photocurable liquid composition includes a photopolymerizable monomer (A) having an ethylenically unsaturated double bond. The photopolymerizable monomer includes a polyfunctional monomer (A1) having three or more of the ethylenically unsaturated double bond. As a result, the cured product in which localization of the metal oxide nanoparticles can be formed. In addition, a difunctional monomer (A2) and/or a monofunctional monomer (A3) can be used with the polyfunctional monomer (A1) as the photopolymerizable monomer (A).

Since cured product with high transparency can be easily obtained, and localization of the metal oxide nanoparticles (B) in the cured product can be easily suppressed, the polyfunctional monomer (A1) is preferably a compound including no aromatic group.

In view of curability of the photocurable liquid composition and suppressing localization of the metal oxide nanoparticles in the cured product, a number of ethylenically unsaturated double bonds possessed by the polyfunctional monomer (A1) is preferably 3 or more and 6 or less.

For example, suitable examples of the polyfunctional monomer (A1) includes trimethylolpropane tri(meth)acrylate, glycerin tri(meth)acrylate, pentaerythrythol tri(meth)acrylate, pentaerythrythol tetra(meth)acrylate, dipentaerythrythol penta(meth)acrylate, dipentaerythrythol, hexa(meth)acrylate, glycerin polyglycydil ether poly(meth)acrylate, condensate of polyhydric alcohol and N-methylol (meth)acrylamide, and the like.

In addition, the photocurable liquid composition preferably includes a compound represented by following formula (A1) or following formula (A2) as the polyfunctional monomer (A1).

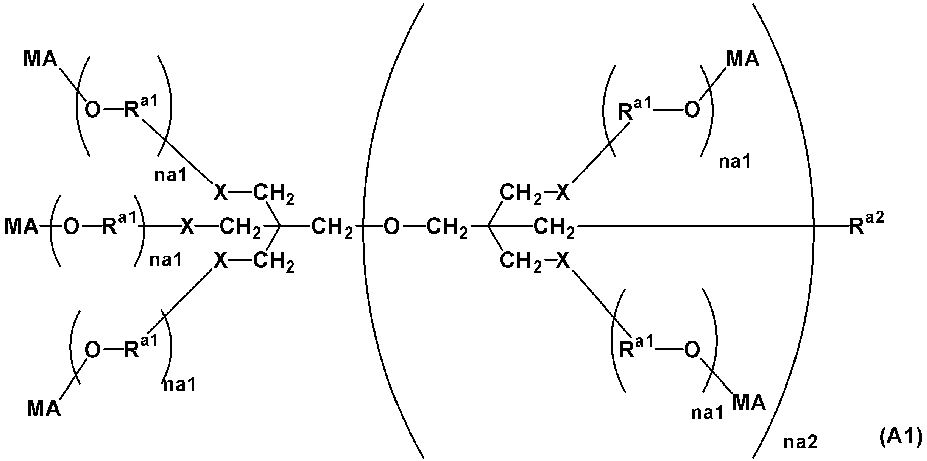

(MA-(O-R^{a1})ₙₐ₁-X-CH₂)₂-CH-X-(R^{a1}-O)ₙₐ₁-MA (A2)

In the formula (A1) and the formular (A2), MAs are each independently (meth)acryloyl group, Xs are each independently oxygen atom -NH-, or -N(CH₃)-, R^{a1}s are each independently ethane-1,2-diyl group, propane-1,2-diyl group, or propane-1,3-diyl group, R^{a2} is a hydroxy group, an alkyl group having 1 or more and 4 or less carbon atoms, or a group represented by -X-(R^{a1}-O)ₙₐ₁-MA (wherein X is the same as the above), and na1 and na2 are each independently 0 or 1.

In the formula (A1), examples of the alkyl group having 1 or more and 4 or less carbon atoms as R^{a2} include methyl group, ethyl group, n-propyl group, isopropyl group, n-butyl group, isobutyl group, sec-butyl group, and tert-butyl group. Among these alkyl groups, methyl group and ethyl group are preferred.

Suitable examples of the compound represented by the formula (A1) and the compound represented by the formula (A2) include pentaerythrythol tetra(meth)acrylate, dipentaerythrythol hexa(meth)acrylate, trimethylolpropane tri(meth)acrylate, glycerin tri(meth)acrylate and following compounds 1) to 32). In compounds of following 1) to 32), MA is (meth)acryloyl group.
1)

   (MA-NH-CH₂)₄-C
2)

   (MA-N(CH₃)-CH₂)₄-C
3)

   (MA-O-CH₂CH₂CH₂-O-CH₂)₄-C
4)

   (MA-O-CH₂CH₂-O-CH₂)₄-C
5)

   (MA-O-CH₂CH₂CH₂-NH-CH₂)₄-C
6)

   (MA-O-CH₂CH₂-NH-CH₂)₄-C
7)

   (MA-O-CH₂CH₂CH₂-N(CH₃)-CH₂)₄-C
8)

   (MA-O-CH₂CH₂-N(CH₃)-CH₂)₄-C
9)

   (MA-NH-CH₂)₃-C-CH₂-O-CH₂-C-(CH₂-NH-MA)₃
10)

   (MA-N(CH₃)-CH₂)₃-C-CH₂-O-CH₂-C-(CH₂-N(CH₃)-MA)₃
11)

   (MA-O-CH₂CH₂CH₂-O-CH₂)₃-C-CH₂-O-CH₂-C-(CH₂-O-CH₂CH₂CH₂-O-MA)₃
12)

   (MA-O-CH₂CH₂-O-CH₂)₃-C-CH₂-O-CH₂-C-(CH₂-O-CH₂CH₂-O-MA)₃
13)

   (MA-O-CH₂CH₂CH₂-NH-CH₂)₃-C-CH₂-O-CH₂-C-(CH₂-NH-CH₂CH₂CH₂-O-MA)₃
14)

   (MA-O-CH₂CH₂-NH-CH₂)₃-C-CH₂-O-CH₂-C-(CH₂-NH-CH₂CH₂-O-MA)₃
15)

   (MA-O-CH₂CH₂CH₂-N(CH₃)-CH₂)₃-C-CH₂-O-CH₂-C-(CH₂-N(CH₃)-CH₂CH₂CH₂-O-MA)₃
16)

   (MA-O-CH₂CH₂-N(CH₃)-CH₂)₃-C-CH₂-O-CH₂-C-(CH₂-N(CH₃)-CH₂CH₂-O-MA)₃
17)

   (MA-NH-CH₂)₂-CH-NH-MA
18)

   (MA-N(CH₃)-CH₂)₂-CH-N(CH₃)-MA
19)

   (MA-O-CH₂CH₂CH₂-O-CH₂)₂-CH-O-CH₂CH₂CH₂-O-MA
20)

   (MA-O-CH₂CH₂-O-CH₂)₂-CH-C-O-CH₂CH₂-O-MA
21)

   (MA-O-CH₂CH₂CH₂-NH-CH₂)₂-CH-NH-CH₂CH₂CH₂-O-MA
22)

   (MA-O-CH₂CH₂-NH-CH₂)₂-CH₂-NH-CH₂CH₂-O-MA
23)

   (MA-O-CH₂CH₂CH₂-N(CH₃)-CH₂)₂-CH₂-N(CH₃)-CH₂CH₂CH₂-O-MA
24)

   (MA-O-CH₂CH₂-N(CH₃)-CH₂)₂-CH₂-N(CH₃)-CH₂CH₂-O-MA
25)

   (MA-NH-CH₂)₃-C-CH₂CH₃
26)

   (MA-N(CH₃)-CH₂)₃-C-CH₂CH₃
27)

   (MA-O-CH₂CH₂CH₂-O-CH₂)₃-C-CH₂CH₃
28)

   (MA-O-CH₂CH₂-O-CH₂)₃-C-CH₂CH₃
29)

   (MA-O-CH₂CH₂CH₂-NH-CH₂)₃-C-CH₂CH₃
30)

   (MA-O-CH₂CH₂-NH-CH₂)₃-C-CH₂CH₃
31)

   (MA-O-CH₂CH₂CH₂-N(CH₃)-CH₂)₃-C-CH₂CH₃
32)

   (MA-O-CH₂CH₂-N(CH₃)-CH₂)₃-C-CH₂CH₃

In view of suppressing localization of the metal oxide nanoparticles (B), a ratio of a mass of the polyfunctional monomer (A1) is preferably 20 % by mass or more and 70 % by mass or less, more preferably 30 % by mass or more and 70 % by mass or less, and further preferably 40 % by mass or more and 70 % by mass or more relative to a mass of the photopolymerizable monomer (A).

Examples of the difunctional monomer (A2) include ethylene glycol di(meth)acrylate, diethylene glycol di(meth)acrylate, tetraethylene glycol di(meth)acrylate, propylene glycol di(meth)acrylate, polypropylene glycol di(meth)acrylate, butylene glycol di(meth)acrylate, neopentyl glycol di(meth)acrylate, 1,6-hexane glycol di(meth)acrylate, glycerin di(meth)acrylate, pentaerythrylthol di(meth)acrylate, 2,2-bis(4-(meth)acryloxydiethoxyphenyl)propane, 2,2-bis(4-(meth)acryloxypolyethoxyphenyl)propane, 2-hydroxy-3-(meth)acryloyloxypropyl (meth)acrylate, ethylene glycol diglycidyl ether di(meth)acrylate, diethylene glycol diglycidyl ether di (meth)acrylate, phthalic acid diglycidyl ether di(meth)acrylate, urethane (meth)acrylate (in other words, a reaction product of a tolylene diisocyanate, trimethylhexamethylene diisocyanate, or hexamethylene diisocyanate, and 2-hydroxyethyl (meth)acrylate), methylenebis(meth)acrylamide, (meth)acrylamide methylene ether, and the like.

Since a cured product with high refractive index can be easily formed, the photopolymerizable monomer (A) preferably include a compound represented by following formula (a-1) as the difunctional monomer (A2).

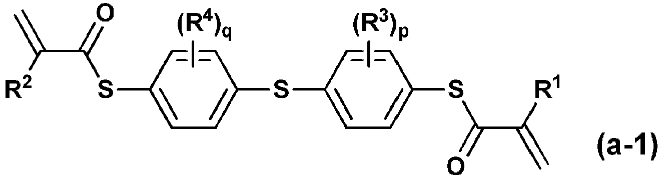

In the formula (a-1), R¹ and R² are each independently hydrogen atom or methyl group. R³ and R⁴ are each independently an alkyl group having 1 or more and 5 or less carbon atoms.
p and q are each independently 0 or 1.

R¹ and R² are each independently hydrogen atom or methyl group. R¹ and R² are may be the same or different. R¹ and R² are preferably the same in view of ease of synthesis and availability of the compound represented by the formula (a-1).

R³ and R⁴ are each independently an alkyl group having 1 or more and 5 or less carbon atoms. R³ and R⁴ are may be the same or different. R³ and R⁴ are preferably the same in view of ease of synthesis and availability of the compound represented by the formula (a-1).

The alkyl group having 1 or more and 5 or less carbon atoms as R³ and R⁴ can be liner or branched. Examples of the alkyl group having 1 or more and 5 or less carbon atoms as R³ and R⁴ include methyl group, ethyl group, n-propyl group, isopropyl group, n-butyl group, isobutyl group, sec-butyl group, tert-butyl group, n-pentyl group, isopentyl group, and tert-pentyl group.

Suitable specific examples of the compound represented by the formula (a-1) include following compounds.

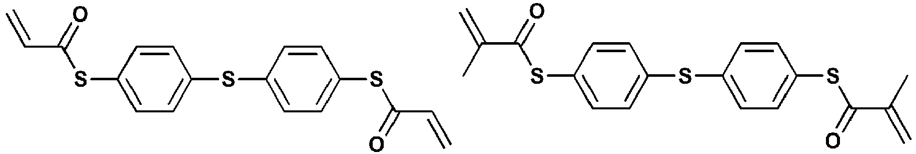

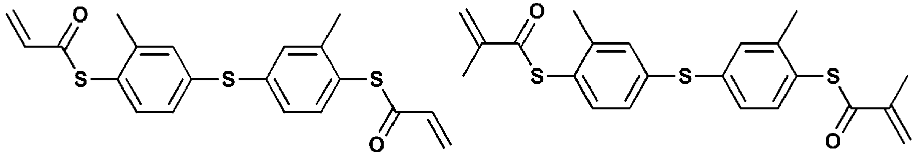

When the photopolymerizable liquid composition includes the bifunctional monomer (A2), a ratio of a mass of the bifunctional monomer relative to a mass of the photopolymerizable monomer (A) is not particularly limited as long as long as the desired effect is not impaired. The ratio of the mass of the difunctional monomer (A2) is preferably 0 % by mass or more, more preferably 10 % by mass or more, further preferably 20 % by mass or more, and particularly preferably 30 % by mass or more relative to the mass of the photopolymerizable monomer (A). For example, upper limit is preferably 50 % by mass or more, and more preferably 45 % by mass or more. When the photopolymerizable monomer (A) includes the compound represented by the formula (a-1) as the difunctional monomer (A2), a ratio of a mass of the compound represented by the formula (a-1) is preferably 10 % by mass or more and 30 % by mass or less, and more preferably 15 % by mass or more and 25 % by mass or less relative to the mass of the photopolymerizable monomer (A).

Examples of the monofunctional monomer (A3) include (meth)acrylamide, methylol (meth)acrylamide, methoxymethyl(meth)acrylamide, ethoxymethyl(meth)acrylamide, propoxymethyl(meth)acrylamide, butoxymethoxymethyl(meth)acrylamide, N-methylol (meth)acrylamide, N-hydroxymethyl(meth)acrylamide, (meth)acrylic acid, fumaric acid, maleic acid, maleic anhydride, itaconic acid, itaconic anhydride, citraconic acid, citraconic anhydride, crotonic acid, 2-acrylamide-2-methylpropanesulfonic acid, tert-butylacrylamide sulfonic acid, methyl (meth)acrylate, ethyl (meth)acrylate, butyl (meth)acrylate, 2-ethylhexyl (meth)acrylate, cyclohexyl (meth)acrylate, 2-hydroxyethyl (meth)acrylate, 2-hydroxypropyl (meth)acrylate, 2-hydroxybutyl (meth)acrylate, 2-phenoxy-2-hydroxypropyl (meth)acrylate, 2-(meth)acryloyloxy-2-hydroxypropyl phthalate, glycerin mono(meth)acrylate, tetrahydrofurfuryl (meth)acrylate, dimethylamino (meth)acrylate, glycidyl (meth)acrylate, 2,2,2-trifluoroethyl (meth)acrylate, 2,2,3,3-tetrafluoropropyl (meth)acrylate, and half (meth)acrylates of phthalic acid derivatives. These monofunctional monomers (A3) may be used individually, or two or more thereof may be used in combination.

Since a viscosity of the photocurable liquid composition can be decreased, and the cured product with high refractive index can be easily formed, the photopolymerizable monomer (A) preferably includes a compound represented by following formula (a-2) as the monofunctional monomer (A3).

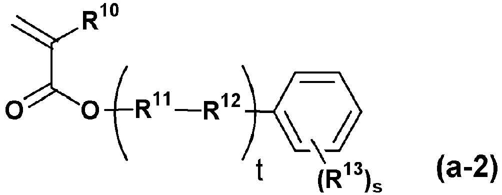

In the formula (a-2), R¹⁰ is hydrogen atom or methyl group. R¹¹ is an alkylene group having 1 or more and 3 or less carbon atoms. R¹² is single bond, oxygen atom, or sulfur bond. R¹³ is an alkyl group having 1 or more 4 or less carbon atoms, an alkoxy group having 1 or more and 4 or less carbon atoms, phenoxy group, or phenyl group. S is an integer of 0 or more and 5 or less.
t is 0, 1, or 2.

In the formula (a-2), when t is 2, the plurality of R¹¹ may be the same or different, and preferably the same. When t is 2, the plurality of R¹² may be the same or different, and preferably the same.

R¹¹ is an alkylene group having 1 or more ad 3 or less carbon atoms. Specific examples of the alkylene group include methylene group, ethane-1,2-diyl group (ethylene group), ethane-1,1-diyl group, propane-1,3-diyl group, propane-1,2-diyl group, and propane-2,2-diyl group. Among these, methylene group, ethane-1,2-diyl group (ethylene group), and propane-1,2-diyl group are preferred, and ethane-1,2-diyl group (ethylene group) is more preferred.

R¹² is single bond, oxygen atom, or sulfur atom, and single bond is preferable. When R¹² is the single bond, t is preferably 1.

R¹³ is an alkyl group having 1 or more and 4 or less carbon atoms, an alkoxy group having 1 or more and 4 or less carbon atoms, phenoxy group, or phenyl group. In view of lowering viscosity, R¹³ is preferably the alkyl group having 1 or more and 4 or less carbon atoms or the alkoxy group having 1 or more and 4 or less carbon atoms. Specific examples of the alkyl group include methyl group, ethyl group, n-propyl group, isopropyl group, n-butyl group, isobutyl group, sec-butyl group, and tert-butyl group. Among these, methyl group and ethyl group are preferred, and methyl group is more preferred. Specific examples of the alkoxy group include methoxy group, ethoxy group, n-propyloxy group, isopropyloxy group, n-butyloxy group, isobutyloxy group, sec-butyloxy group, and tert-butyloxy group. Among these, methoxy group and ethoxy group are preferred, and methoxy group is more preferred. s is an integer of 0 or more and 5 or less, preferably 0 or 1, and more preferably 0.

Suitable specific examples of the compound represented by the formula (a-2) include following compounds.

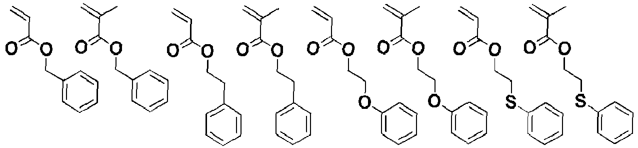

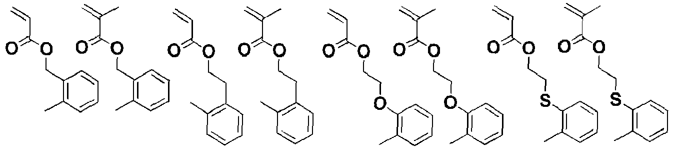

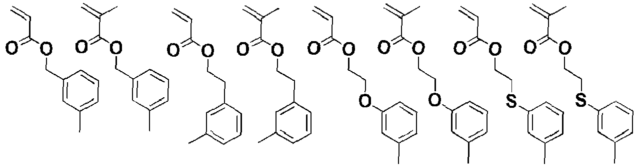

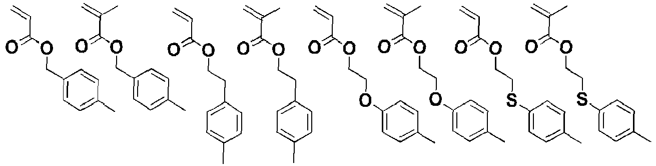

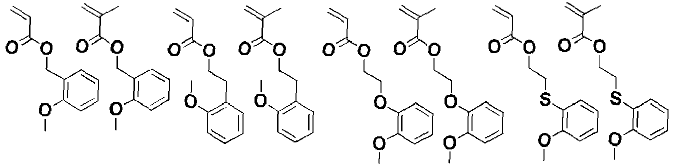

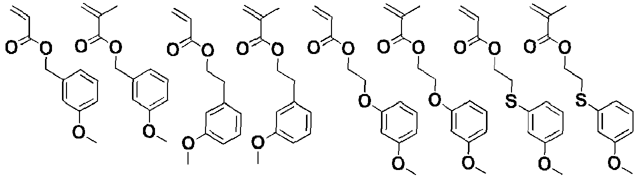

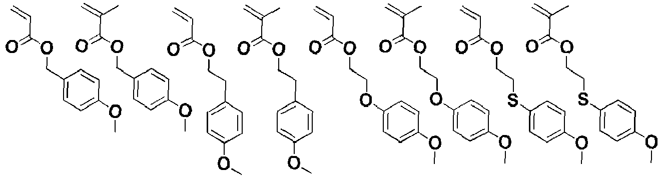

When the photopolymerizable monomer (A) includes the monofunctional monomer (A3), a ratio of the mass of the monofunctional monomer (A3) relative to the mass of the photopolymerizable monomer (A) is not particularly limited as long as long as the desired effect is not impaired. The ratio of the mass of the monofunctional monomer (A3) is preferably 50 % by mass or more, and more preferably 55 % by mass or more relative to the mass of the photopolymerizable monomer (A). For example, upper limit may be 80 % by mass.

A ratio of the mass of the photopolymerizable monomer (A) is preferably 20 % by mass or more and 90 % by mass or less, more preferably 23 % by mass or more and 60 % by mass or less, and further preferably 33 % by mass or more and 50 % by mass or less relative to the mass of the photocurable liquid composition excluding the mass of the solvent (S).

### <Metal oxide nanoparticles (B)>

The photocurable liquid composition includes metal oxide nanoparticles (B). A type of metal oxide constituting the metal oxide nanoparticles is not particularly limited as long as long as the desired effect is not impaired. Suitable examples of the metal oxide nanoparticles (B) include at least one selected from the group consisting of zirconium oxide nanoparticles, titanium oxide nanoparticles, barium titanate nanoparticles, cerium oxide nanoparticles. The photocurable liquid composition may include one of these metal oxide nanoparticles (B) alone, or two or more thereof in combination. The cured product with high refractive index can be formed by inclusion of the above metal oxide nanoparticles (B) in the photocurable liquid composition.

In view of transparency of the cured product, average particle diameter of the metal oxide nanoparticles is preferably 500 nm or less, and preferably 2nm or more and 100 nm or less.

In the metal oxide nanoparticles (B), the surfaces thereof are preferably modified with an ethylenically unsaturated double bond-containing group. When the surfaces of the metal oxide nanoparticles (B) are modified with the ethylenically unsaturated double bond containing-group, during the formation of the cured product, the metal oxide nanoparticles (B) are fixed in a matrix consisting of a polymer of the photopolymerizable monomer (A) by polymerizing the photopolymerizable compound (A) with the metal oxide nanoparticles (B). As a result, aggregation of metal oxide nanoparticles (B) is less likely to occur. Therefore, when the surfaces of the metal oxide nanoparticles (B) are modified with the ethylenically unsaturated double bond-containing group, suppressing localization of the metal oxide nanoparticles in the cured product is particularly easy.

For example, the metal oxide nanoparticles (B) surface-modified with the ethylenically unsaturated double bond-containing group via a chemical bond such as covalent bond can be obtained by acting a capping agent including the ethylenically unsaturated double bond-containing group to the surfaces of the metal oxide nanoparticles (B).

A method for bonding the capping agent including the ethylenically unsaturated double bond to the surfaces of the metal oxide nanoparticles (B) via a chemical bond such as covalent bond is not particularly limited. Usually, hydroxy groups are present on the surfaces of the metal oxide nanoparticles (B). By reacting such hydroxy groups and the capping agents, the capping agents covalently binds to the surfaces of the metal oxide nanoparticles (B). Suitable examples of the reactive group possessed by the caping agent include a trialkoxysilyl group such as trimethoxysilyl group and triethoxysilyl group; a dialkoxysilyl group such as dimethoxysilyl group and diethoxysilyl group; a monoalkoxysilyl group such as monomethoxysilyl group and monoethoxysilyl group; a trihalosilyl group such as trichlorosily group; a dihalosilyl group such as dichlorosilyl group; a monohalosilyl group such as monochlorosilyl group; carboxy group; a halocarbonyl group such as chlorocarbonyl group; hydroxy group; phosphono group (-P(=O)(OH)₂); and phosphate group (-O-P(=O) (OH)₂).

A trialkoxysilyl group, a dialkoxysilyl group, a monoalkoxysilyl group, a trihalosilyl group, a dihalosilyl group, and a monohalosilyl group form a siloxane bond together with a surface of a metal oxide nanoparticles (B). A carboxy group and a halocarbonyl group form a bond represented by (metal oxide-O-CO-) together with a surface of a metal oxide nanoparticles (B). A hydroxy group forms a bond represented by (metal oxide -O-) together with a surface of the metal oxide nanoparticles (B). The phosphono group and the phosphate group forms a bond represented by (metal oxide-OP(=O)<) together with a surface of a metal oxide nanoparticles (B) .

In the capping agent, a hydrogen atom and various organic groups are exemplified as a group to be bonded to the above-described reactive group. The organic group may include a hetero atom such as O, N, S, P, B, Si, halogen atom, and the like. Examples of a group to be bonded to the reactive group include an alkyl group which may be linear or branched and may be interrupted with oxygen atom (-O-), an alkenyl group which may be linear or branched and may be interrupted with oxygen atom (-O-), an alkynyl group which may be linear or branched and may be interrupted with oxygen atom (-O-), a cycloalkyl group, an aromatic hydrocarbon group, a heterocyclic group, and the like. These groups may be substituted with a substituent such as a halogen atom, an epoxy group-containing group such as glycidyl group, hydroxy group, mercapto group, amino group, (meth)acryloyl group, isocyanate group, and the like. There is no particular limitation on the number of substituents.

The group to be bonded to the reactive group is also preferably a group represented by - (SiR^{b1}R^{b2}-O-)ᵣ-(SiR^{b3}R^{b4}-O-)ₛ-R^{b5}. R^{b1}, R^{b2}, R^{b3}, and R^{b4} each are an organic group which may be the same or different. Suitable examples of the organic group include an alkyl group such as methyl group or ethyl group; an alkenyl group such as vinyl group or allyl group; an aromatic hydrocarbon group such as phenyl group, naphthyl group, or tolyl group; an epoxy group-containing group such as 3-glycidoxypropyl group; (meth)acryloyloxy group, and the like. Examples of R^{b5} in the above formula include terminal groups such as -Si(CH₃)₃, -Si(CH₃)₂H, -Si(CH₃)₂(CH=CH₂), and - Si(CH₃)₂(CH₂CH₂CH₂CH₃).
r and s in the above formula each independently is an integer of 0 to 60. Both r and s in the above formula are not 0.

Suitable specific examples of the capping agent include unsaturated group-containing alkoxysilanes such as vinyltrimethoxysilane, vinyltriethoxysilane, allyltrimethoxysilane, allyltriethoxysilane, 1-hexenyltrimethoxysilane, 1-hexenyltriethoxysilane, 1-octenyltrimethoxysilane, 1-octenyltriethoxysilane, 3-acryloyoxypropyltrimethoxyxilane, 3-acryloyloxypropyltriethoxysilane, 3-methacryloyoxypropyltrimethoxysilane, and 3-methacryloyloxypropytriethoxysilane; unsaturated group-containing alcohols such as 2-hydroxyethyl (meth)acrylate, 3-hydroxypropyl (meth)acrylate, allylalcohol, ethylene glycol monoallylether, propylene glycol monoallylether, and 3-allyloxypropanol; (meth)acrylic acid; (meth)acrylic halides such as (meth)acrylic chloride.

An amount of the capping agent used to bind the capping agent to the surfaces of the metal oxide nanoparticles (B) via a chemical bond such as a covalent bond is not particularly limited. Preferably, the capping agent is used in an amount enough to react with almost all of hydroxy groups of the surface of the metal oxide nanoparticles (B).

There is no particular limitation on the content of the metal oxide nanoparticles (B) in the photocurable liquid composition as long as the object of the present invention is not impaired. For example, a content of the metal oxide nanoparticles (B) in the photocurable liquid composition is 5 % by mass or more and 95 % by mass or less, preferably 5 % by mass or more and 75 % by mass or less, more preferably 35 % by mass or more and 70 % by mass or less, and further preferably 40 % by mass or more and 65 % by mass or less. For higher refractive index of the cured product, 40 % by mass or more and 93 % by mass or less is preferred. When the content of the metal oxide nanoparticles (B) in the photocurable liquid composition is within the above range, localization of the metal oxide nanoparticles (B) in the cured product can be easily suppressed, and the cured product with high refractive index can be easily formed. When the surfaces of the metal oxide nanoparticles (B) are modified with the ethylenically unsaturated double bond-containing group, a mass of the capping agent existing on the surfaces of the metal oxide nanoparticles (B) is included in the mass of the metal oxide nanoparticles (B).

### <Photopolymerization initiator (C)>

The photopolymerization initiator (C) is not particularly limited and may be a conventionally known photopolymerization initiator.

Specific examples of the photopolymerization initiator (C) include 1-hydroxycyclohexyl phenyl ketone, 2-hydroxy-2-methyl-1-phenylpropan-1-one, 1-[4-(2-hydroxyethoxy)phenyl]-2-hydroxy-2-methyl-1-propan-1-one, 1-(4-isopropylphenyl)-2-hydroxy-2-methylpropan-1-one, 1-(4-dodecylphenyl)-2-hydroxy-2-methylpropan-1-one, 2,2-dimethoxy-1,2-diphenylethan-1-one, bis(4-dimethylaminophenyl) ketone, 2-methyl-1-[4-(methylthio)phenyl]-2-morpholinopropan-1-one, 2-benzyl-2-dimethylamino-1-(4-morpholinophenyl)-butan-1-one, O-acetyl-1-[6-(2-methylbenzoyl)-9-ethyl-9H-carbazol-3-yl]ethanone oxime, O-acetyl-1-[6-(pyrrole-2-ylcarbonyl)-9-ethyl-9H-carbazol-3-yl]ethanone oxime, (9-ethyl-6-nitro-9H-carbazol-3-yl)[4-(2-methoxy-1-methylethoxy)-2-methylphenyl]methanone O-acetyloxime, 2-(benzoyloxyimino)-1-[4-(phenylthio)phenyl]-1-octanone, 2,4,6-trimethylbenzoyldiphenylphosphine oxide, 4-benzoyl-4'-methyldimethyl sulfide, 4-dimethylaminobenzoic acid, methyl 4-dimethylaminobenzoate, ethyl 4-dimethylaminobenzoate, butyl 4-dimethylaminobenzoate, 4-dimethylamino-2-ethylhexylbenzoic acid, 4-dimethylamino-2-isoamylbenzoic acid, benzyl-β-methoxyethyl acetal, benzyl dimethyl ketal, 1-phenyl-1,2-propanedion-2-(O-ethoxycarbonyl) oxime, methyl o-benzoylbenzoate, 2,4-diethylthioxanthone, 2-chlorothioxanthone, 2,4-dimethylthioxanthone, 1-chloro-4-propoxythioxanthone, thioxanthene, 2-chlorothioxanthene, 2,4-diethylthioxanthene, 2-methylthioxanthene, 2-isopropylthioxanthene, 2-ethylanthraquinone, octamethylanthraquinone, 1,2-benzanthraquinone, 2,3-diphenylanthraquinone, azobisisobutyronitrile, benzoyl peroxide, cumene hydroperoxide, 2-mercaptobenzimidazole, 2-mercaptobenzoxazole, 2-mercaptobenzothiazole, 2-(o-chlorophenyl)-4,5-di(m-methoxyphenyl)-imidazolyl dimer, benzophenone, 2-chlorobenzophenone, p,p'-bisdimethylaminobenzophenone, 4,4'-bisdiethylaminobenzophenone, 4,4'-dichlorobenzophenone, 3,3-dimethyl-4-methoxybenzophenone, benzil, benzoin, benzoin methyl ether, benzoin ethyl ether, benzoin isopropyl ether, benzoin-n-butyl ether, benzoin isobutyl ether, benzoin butyl ether, acetophenone, 2,2-diethoxyacetophenone, p-dimethylacetophenone, p-dimethylaminopropiophenone, dichloroacetophenone, trichloroacetophenone, p-tert-butylacetophenone, p-dimethylaminoacetophenone, p-tert-butyltrichloroacetophenone, p-tert-butyldichloroacetophenone, α,α-dichloro-4-phenoxyacetophenone, thioxanthone, 2-methylthioxanthone, 2-isopropylthioxanthone, dibenzosuberone, pentyl 4-dimethylaminobenzoate, 9-phenylacridine, 1,7-bis-(9-acridinyl)heptane, 1,5-bis-(9-acridinyl)pentane, 1,3-bis-(9-acridinyl)propane, p-methoxytriazine, 2,4,6-tris(trichloromethyl)-s-triazine, 2-methyl-4,6-bis(trichloromethyl)-s-triazine, 2-[2-(5-methylfuran-2-yl)ethenyl]-4,6-bis(trichloromethyl)-s-triazine, 2-[2-(furan-2-yl)ethenyl]-4,6-bis(trichloromethyl)-s-triazine, 2-[2-(4-diethylamino-2-methylphenyl)ethenyl]-4,6-bis(trichloromethyl)-s-triazine, 2-[2-(3,4-dimethoxyphenyl)ethenyl]-4,6-bis(trichloromethyl)-s-triazine, 2-(4-methoxyphenyl)-4,6-bis(trichloromethyl)-s-triazine, 2-(4-ethoxystyryl)-4,6-bis(trichloromethyl)-s-triazine, 2-(4-n-butoxyphenyl)-4,6-bis(trichloromethyl)-s-triazine, 2,4-bis-trichloromethyl-6-(3-bromo-4-methoxy)phenyl-s-triazine, 2,4-bis-trichloromethyl-6-(2-bromo-4-methoxy)phenyl-s-triazine, 2,4-bis-trichloromethyl-6-(3-bromo-4-methoxy)styrylphenyl-s-triazine, 2,4-bis-trichloromethyl-6-(2-bromo-4-methoxy)styrylphenyl-s-triazine, and the like. These photopolymerization initiators (C) may be used individually, or two or more thereof may be used in combination.

Among photopolymerization initiators, an oxime ester compound is preferable from the viewpoint of sensitivity of the photocurable liquid composition. A compound including the partial structure represented by following formula (c1) is preferable as the oxime ester compound.

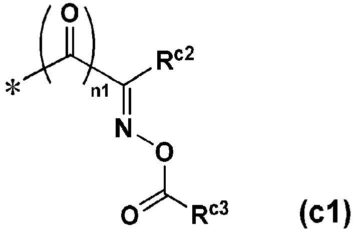

In the formula (c1), n1 is 0 or 1, R^{c2} is a monovalent organic group, R^{c3} is a hydrogen atom, an optionally substituted aliphatic hydrocarbon group having 1 or more and 20 or less carbon atoms, or an optionally substituted aryl group, and * is a bond.

The compound including the partial structure represented by the formula (c1) preferably has a carbazole skeleton, a fluorene skeleton, a diphenyl ether skeleton, or a phenyl sulfide skeleton. The compound including the partial structure represented by the formula (c1) preferably has 1 or 2 partial structures represented by the formula (c1).

As a compound having a partial structure represented by the formula (c1), a compound represented by following formula (c2) is exemplified.

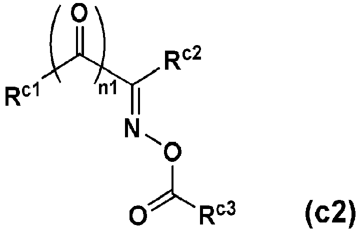

In the formula (c2), R^{c1} is a group represented by following formula (c3), (c4) or (c5). n1 is 0 or 1. R^{c2} is a monovalent organic group. R^{c3} is hydrogen atom, an optionally substituted aliphatic hydrocarbon group having 1 or more and 20 or less carbon atoms, or an optionally substituted aryl group.

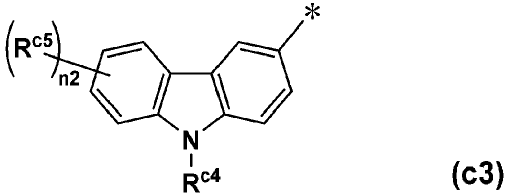

In the formula (c3), R^{c4} and R^{c5} are each independently a monovalent organic group. n2 is an integer of 0 or more and 3 or less. When n2 is 2 or 3, plural R^{c5}s may be the same as or different each other, and plural R^{c5}s may be combined to each other to form a ring. * is a bond.

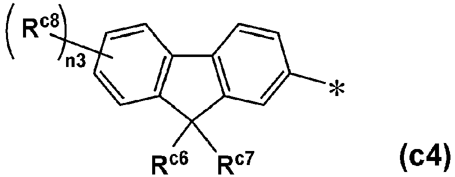

In the formula (c4), R^{c6} and R^{c7} are each independently an optionally substituted chain alkyl group, an optionally substituted chain alkoxy group, an optionally substituted cyclic organic group, or a hydrogen atom. R^{c6} and R^{c7} may be combined to each other to form a ring. R^{c7} and a benzene ring in the fluorene skeleton may be combined to each other to form a ring. R^{c8} is nitro group or a monovalent organic group. n3 is an integer of 0 or more and 4 or less. * is a bond.

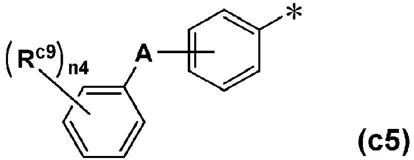

In the formula (c5), R^{c9} is a monovalent organic group, a halogen atom, nitro group, or cyano group, A is S or O, n4 is an integer of 0 or more and 4 or less, and * is a bond.

In the formula (c3), R^{c4} is a monovalent organic group. R^{c4} can be selected from various kinds of organic groups as long as it does not interfere with the object of the present invention. As the organic group, a carbon atom-containing group is preferred, and a group consisting of 1 or more carbon atoms, and 1 or more atoms selected from the group consisting of H, O, S, Se, N, B, P, Si and a halogen atom is more preferred. The number of carbon atoms in the carbon atom-containing group is not particularly limited, and is preferably 1 or more and 50 or less, and more preferably 1 or more and 20 or less. Suitable examples of R^{c4} include an optionally substituted alkyl group having 1 or more and 20 or less carbon atoms, an optionally substituted cycloalkyl group having 3 or more an 20 or less carbon atoms, an optionally substituted saturated aliphatic acyl group having 2 or more and 20 or less carbon atoms, an optionally substituted alkoxycarbonyl group having 2 or more and 20 or less carbon atoms, an optionally substituted phenyl group, an optionally substituted benzoyl group, an optionally substituted phenoxycarbonyl group, an optionally substituted phenylalkyl group having 7 or more and 20 or less carbon atoms, an optionally substituted naphthyl group, an optionally substituted naphthoyl group, an optionally substituted naphthoxycarbonyl group, an optionally substituted naphthylalkyl group having 11 or more and 20 or less carbon atoms, an optionally substituted heterocyclyl group, an optionally substituted heterocyclylcarbonyl group, and the like.

For R^{c4}, the alkyl group having 1 or more and 20 or less carbon atoms is preferred. The alkyl group may be linear or branched. The number of carbon atoms in the alkyl group as R^{c4} is preferably 2 or more, more preferably 5 or more, and particularly preferably 7 or more, from the viewpoint of good solubility of the compound represented by the formula (c3) in the photocurable liquid composition. From the viewpoint of good compatibility between the compound represented by the formula (c3) and other components in the photocurable liquid composition, the number of carbon atoms in the alkyl group as R^{c4} is preferably 15 or less, and more preferably 10 or less.

When R^{c4} has a substituent, suitable examples of the substituent include a hydroxy group, an alkyl group having 1 or more and 20 or less carbon atoms, an alkoxy group having 1 or more and 20 or less carbon atoms, an aliphatic acyl group having 2 or more and 20 or less carbon atoms, an aliphatic acyloxy group having 2 or more and 20 or less carbon atoms, a phenoxy group, a benzoyl group, a benzoyloxy group, a group represented by -PO(OR)₂ (in which, R is an alkyl group having 1 or more and 6 or less carbon atoms), a halogen atom, a cyano group, a heterocyclyl group, and the like.

When R^{c4} is a heterocyclyl group, the heterocyclyl group may be an aliphatic heterocyclic group or an aromatic heterocyclic group. When R^{c4} is the heterocyclyl group, the heterocyclyl group is a 5- or 6-membered single ring containing one or more N, S, and O, or a heterocyclyl group in which single rings are fused each other, or a single ring is fused with a benzene ring. When the heterocyclyl group is a fused ring, the number of rings constituting the fused ring is 3 or less. Examples of the heterocycle constituting the heterocyclyl group include furan, thiophene, pyrrole, oxazole, isoxazole, thiazole, thiadiazole, isothiazole, imidazole, pyrazole, triazole, pyridine, pyrazine, pyrimidine, pyridazine, benzofuran, benzothiophene, indole, isoindole, indolizine, benzoimidazole, benzotriazole, benzoxazole, benzothiazole, carbazole, purine, quinoline, isoquinoline, quinazoline, phthalazine, cinnoline, quinoxaline, piperidine, piperazine, morpholine, tetrahydropyran, tetrahydrofuran, and the like. When R^{c4} is the heterocyclyl group, examples of substituent that the heterocyclyl group may have include hydroxy group, an alkoxy group having 1 or more and 6 or less carbon atoms, a halogen atom, cyano group, nitro group, and the like.

Suitable examples of above described R^{c4} include methyl group, ethyl group, n-propyl group, isopropyl group, n-butyl group, isobutyl group, sec-butyl group, tert-butyl group, n-pentyl group, isopentyl group, neopentyl group, pentane-3-yl group, sec-pentyl group, tert-pentyl group, n-hexyl group, n-heptyl group, n-octyl group and 2-ethylhexyl group. In addition, the n-octyl group and the 2-ethylhexyl group is preferable, and the 2-ethylhexyl group is more preferable, from the viewpoint of good solubility of the compound represented by the formula (c3) in the curable composition.

In the formula (c3), R^{c5} is a monovalent organic group. R^{c5} can be selected from various organic groups as long as they do not interfere with the object of the present invention. As the organic group, a carbon atom-containing group is preferred, and a group consisting of 1 or more carbon atoms, and 1 or more atoms selected from the group consisting of H, O, S, Se, N, B, P, Si and a halogen atom is more preferred. The number of carbon atoms in the carbon atom-containing group is not particularly limited, and is preferably 1 or more and 50 or less, and more preferably 1 or more and 20 or less. Examples of the monovalent organic group suitable for R^{c5} include an alkyl group, an alkoxy group, a cycloalkyl group, a cycloalkoxy group, a saturated aliphatic acyl group, an alkoxycarbonyl group, a saturated aliphatic acyloxy group, an optionally substituted phenyl group, an optionally substituted phenoxy group, an optionally substituted benzoyl group, an optionally substituted phenoxycarbonyl group, an optionally substituted benzoyloxy group, an optionally substituted phenylalkyl group, an optionally substituted naphthyl group, an optionally substituted naphthoxy group, an optionally substituted naphthoyl group, an optionally substituted naphthoxycarbonyl group, an optionally substituted naphthoyloxy group, an optionally substituted naphthylalkyl group, an optionally substituted heterocyclyl group, an optionally substituted heterocyclylcarbonyl group, an amino group substituted with 1 or 2 organic groups, a morpholine-1-yl group, a piperazine-1-yl group, a halogen atom, a nitro group, a cyano group, a substituent including a group represented by HX₂C- or H₂XC- (in which, X is each independently a halogen atom), and the like.

When R^{c5} is the alkyl group, a number of carbon atoms in the alkyl group is preferably 1 or more and 20 or less, and more preferably 1 or more and 6 or less. When R^{c5} is the alkyl group, the alkyl group may be linear or branched. Specific examples of the alkyl group as R^{c5} include methyl group, an ethyl group, n-propyl group, isopropyl group, n-butyl group, isobutyl group, sec-butyl group, tert-butyl group, n-pentyl group, isopentyl group, sec-pentyl group, tert-pentyl group, n-hexyl group, n-heptyl group, n-octyl group, isooctyl group, sec-octyl group, tert-octyl group, n-nonyl group, isononyl group, n-decyl group, isodecyl group, and the like. When R^{c5} is alkyl group, the alkyl group may contain an ether bond (-O-) in the carbon chain. Examples of the alkyl group having an ether bond in a carbon chain include methoxyethyl group, ethoxyethyl group, methoxyethoxyethyl group, ethoxyethoxyethyl group, propyloxyethoxyethyl group, and methoxypropyl group.

When R^{c5} is the alkoxy group, the number of carbon atoms in the alkoxy group is preferably 1 or more and 20 or less, and more preferably 1 or more and 6 or less. When R^{c5} is the alkoxy group, the alkoxy group may be linear or branched. When R^{c5} is the alkoxy groups, specific examples thereof include methoxy group, ethoxy group, n-propyloxy group, isopropyloxy group, n-butyloxy group, isobutyloxy group, sec-butyloxy group, tert-butyloxy group, n-pentyloxy group, isopentyloxy group, sec-pentyloxy group, tert-pentyloxy group, n-hexyloxy group, n-heptyloxy group, n-octyloxy group, isooctyloxy group, sec-octyloxy group, tert-octyloxy group, n-nonyloxy group, isononyloxy group, n-decyloxy group, isodecyloxy group, and the like. When R^{c5} is the alkoxy groups, the alkoxy group may have an ether bond (-O-) in a carbon chain. Examples of the alkoxy group having an ether bond in the carbon chain include methoxyethoxy group, ethoxyethoxy group, methoxyethoxyethoxy group, ethoxyethoxyethoxy group, propyloxyethoxyethoxy group, methoxypropyloxy group, and the like.

When R^{c5} is the cycloalkyl group or the cycloalkoxy group, the number of carbon atoms in the cycloalkyl group or the cycloalkoxy group is preferably 3 or more and 10 or less, and more preferably 3 or more and 6 or less. Specific examples of the cycloalkyl group as R^{c5} include cyclopropyl group, cyclobutyl group, cyclopentyl group, cyclohexyl group, cycloheptyl group, cyclooctyl group, and the like. Specific examples of the cycloalkoxy group as R^{c5} include cyclopropyloxy group, cyclobutyloxy group, cyclopentyloxy group, cyclohexyloxy group, cycloheptyloxy group, cyclooctyloxy group, and the like.

When R^{c5} is a saturated aliphatic acyl group or a saturated aliphatic acyloxy group, a number of carbon atoms in the saturated aliphatic acyl group or a saturated aliphatic acyloxy group is preferably 2 or more and 21 or less, and more preferably 2 or more and 7 or less. When R^{c5} is a saturated aliphatic acyl group, specific examples thereof include acetyl group, propanoyl group, n-butanoyl group, 2-methylpropanoyl group, n-pentanoyl group, 2,2-dimethylpropanoyl group, n-hexanoyl group, n-heptanoyl group, n-octanoyl group, n-nonanoyl group, n-decanoyl group, n-undecanoyl group, n-dodecanoyl group, n-tridecanoyl group, n-tetradecanoyl group, n-pentadecanoyl group, n-hexadecanoyl group, and the like. When R^{c5} is a saturated aliphatic acyloxy group, specific examples thereof include acetyloxy group, propanoyloxy group, n-butanoyloxy group, 2-methylpropanoyloxy group, n-pentanoyloxy group, 2,2-dimethylpropanoyloxy group, n-hexanoyloxy group, n-heptanoyloxy group, n-octanoyloxy group, n-nonanoyloxy group, n-decanoyloxy group, n-undecanoyloxy group, n-dodecanoyloxy group, n-tridecanoyloxy group, n-tetradecanoyloxy group, n-pentadecanoyloxy group, n-hexadecanoyloxy group, and the like.

When R^{c5} is an alkoxycarbonyl group, the number of carbon atoms in the alkoxycarbonyl group is preferably 2 or more and 20 or less, and preferably 2 or more and 7 or less. When R^{c5} is an alkoxycarbonyl group, specific examples thereof include methoxycarbonyl group, ethoxycarbonyl group, n-propyloxycarbonyl group, isopropyloxycarbonyl group, n-butyloxycarbonyl group, isobutyloxycarbonyl group, sec-butyloxycarbonyl group, tert-butyloxycarbonyl group, n-pentyloxycarbonyl group, isopentyloxycarbonyl group, sec-pentyloxycarbonyl group, tert-pentyloxycarbonyl group, n-hexyloxycarbonyl group, n-heptyloxycarbonyl group, n-octyloxycarbonyl group, isooctyloxycarbonyl group, sec-octyloxycarbonyl group, tert-octyloxycarbonyl group, n-nonyloxycarbonyl group, isononyloxycarbonyl group, n-decyloxycarbonyl group, and isodecyloxycarbonyl group.

When R^{c5} is a phenylalkyl group, the number of carbon atoms in the phenylalkyl group is preferably 7 or more and 20 or less, and more preferably 7 or more and 10 or less. In addition, when R^{c5} is a naphthylalkyl group, the number of carbon atoms in the naphthylalkyl group is preferably 11 or more and 20 or less, and more preferably 11 or more and 14 or less. When R^{c5} is a phenylalkyl group, specific examples thereof include benzyl group, 2-phenylethyl group, 3-phenylpropyl group, and 4-phenylbutyl group. When R^{c5} is a naphthylalkyl group, specific examples thereof include α-naphthylmethyl group, β-naphthylmethyl group, 2-(α-naphthyl)ethyl group, and 2-(β-naphthyl)ethyl group. When R^{c5} is a phenylalkyl group or a naphthylalkyl group, R^{c5} may further have a substituent on a phenyl group or a naphthyl group.

When R^{c5} is a heterocyclyl group, the heterocyclyl group is the same as the heterocyclyl group as R^{c4} in the formula (c3), and may further have a substituent. When R^{c5} is a heterocyclylcarbonyl group, the heterocyclyl group included in the heterocyclylcarbonyl group is the same as the heterocyclyl group as R^{c5}.

When R^{c5} is an amino group substituted with one or two organic groups, suitable examples of the organic groups include an alkyl group having 1 or more and 20 or less carbon atoms, a cycloalkyl group having 3 or more and 10 or less carbon atoms, a saturated aliphatic acyl group having 2 or more and 21 or less carbon atoms, an optionally substituted phenyl group, an optionally substituted benzoyl group, an optionally substituted phenylalkyl group having 7 or more and 20 or less carbon atoms, an optionally substituted naphthyl group, an optionally substituted naphthoyl group, an optionally substituted naphthylalkyl group having 11 or more and 20 or less carbon atoms, a heterocyclyl group, and the like. Specific examples of these suitable organic group are the same as R^{c5}. Specific examples of the amino group substituted with one or two organic groups include methylamino group, ethylamino group, diethylamino group, n-propylamino group, di-n-propylamino group, isopropylamino group, n-butylamino group, di-n-butylamino group, n-pentylamino group, n-hexylamino group, n-heptylamino group, n-octylamino group, n-nonylamino group, n-decylamino group, phenylamino group, naphthylamino group, acetylamino group, propanoylamino group, n-butanoylamino group, n-pentanoylamino group, n-hexanoylamino group, n-heptanoylamino group, n-octanoylamino group, n-decanoylamino group, benzoylamino group, α-naphthoylamino group, β-naphthoylamino group, and the like.

When the phenyl group, the naphthyl group, and the heterocyclyl group included in R^{c5} further have a substituent, examples of the substituent include a substituent including a group represented by HX₂C- or H₂XC- (for example, a halogenated alkoxy group including a group represented by HX₂C- or H₂XC-, and a halogenated alkyl group including a group represented by HX₂C- or H₂XC-), an alkyl group having 1 or more and 6 or less carbon atoms, an alkoxy group having 1 or more and 6 or less carbon atoms, a saturated aliphatic acyl group having 2 or more and 7 or less carbon atoms, an alkoxycarbonyl group having 2 or more and 7 or less carbon atoms, a saturated aliphatic acyloxy group having 2 or more and 7 or less carbon atoms, a monoalkyl group having an alkyl group having 1 or more and 6 or less carbon atoms, a dialkyl amino group having alkyl groups having 1 or more and 6 or less carbon atoms, a morpholine-1-yl group, a piperazine-1-yl group, a benzoyl group, a halogen atom, nitro group, cyano group, and the like. When the phenyl group, the naphthyl group, and the heterocyclyl group included in R^{c5} further having one or more substituents, the number of substituents is not particularly limited as long as it does not interfere with the object of the present invention, and is preferably 1 or more and 4 or less. When a phenyl group, a naphthyl group, and a heterocyclyl group included in R^{c5} have a plurality of substituents, the plurality of substituents may be the same or different.

When a benzoyl group, a naphthyl group included in R^{c5} further have a substituent, examples of the substituent include an alkyl group having 1 or more and 6 or less carbon atoms, a morpholine-1-yl group, a piperazine-1-yl group, a 2-thenoyl group (thiophen-2-ylcarbonyl group), a furan-3-ylcarbonyl group, a phenyl group, and the like.

As a halogen atom represented by X, a fluorine atom, a chlorine atom, a bromine atom, and the like are exemplified, and the fluorine atom is preferred.

As a substituent including a group represented by HX₂C- or H₂XC-, a halogenated alkoxy group including a group represented by HX₂C- or H₂XC-, a group having a halogenated alkoxy group including a group represented by HX₂C- or H₂XC-, a halogenated alkyl group including a group represented by HX₂C- or H₂XC-, a group having a halogenated alkyl group including a group represented by HX₂C- or H₂XC-, and the like are exemplified, and the halogenated alkoxy group including a group represented by HX₂C- or H₂XC- or the group having a halogenated alkoxy group including a group represented by HX₂C- or H₂XC- is preferred.

As a group having a halogenated alkyl group including a group represented by HX₂C- or H₂XC-, an aromatic group, such as phenyl group, and naphthyl group, substituted with the halogenated alkyl group including a group represented by HX₂Cor H₂XC-, a cycloalkyl group, such as cyclopentyl group, and cyclohexyl group, substituted with the halogenated alkyl group including a group represented by HX₂C- or H₂XC-, and the like are exemplified, and the aromatic group substituted with the halogenated alkyl group including a group represented by HX₂Cor H₂XC- is preferred.

As a group having a halogenated alkoxy group including a group represented by HX₂C- or H₂XC-, an aromatic group, such as phenyl group, and naphthyl group, substituted with the halogenated alkoxy group including a group represented by HX₂Cor H₂XC-, an alkyl group, such as methyl group, ethyl group, n-propyl group, and i-propyl group, substituted with the halogenated alkoxy group including a group represented by HX₂Cor H₂XC-, a cycloalkyl group, such as cyclopentyl group, and cyclohexyl group, substituted with the halogenated alkoxy group including a group represented by HX₂C- or H₂XC-, and the like are exemplified, and the aromatic group substituted with the halogenated alkoxy group including a group represented by HX₂C- or H₂XC-.

In addition, R^{c5} is also preferably a cycloalkylalkyl group, a phenoxyalkyl group which may have a substituent on the aromatic ring, and a phenylthioalkyl group which may have a substituent on the aromatic ring. The substituent that the phenoxyalkyl group and phenylthioalkyl group may have is the same as the substituent that the phenyl group included in R^{c5} may have.

Among the monovalent organic group, an alkyl group, a cycloalkyl group, an optionally substituted phenyl group, an optionally substituted cycloalkylalkyl group, and a phenylthioalkyl group which may have a substituent on the aromatic ring are preferred as R^{c5}. The alkyl group is preferably an alkyl group having 1 or more and 20 or less carbon atoms, more preferably an alkyl group having 1 or more and 8 or less carbon atoms, particularly preferably an alkyl group having 1 or more and 4 or less carbon atoms, and most preferably a methyl group. Among an optionally substituted phenyl groups, a methylphenyl group is preferable, and a 2-methylphenyl group is more preferable. The number of carbon atoms in the cycloalkyl group included in the cycloalkylalkyl group is preferably 5 or more and 10 or less, more preferably 5 or more and 8 or less, and particularly preferably 5 or 6. The number of carbon atoms in the alkylene group included in the cycloalkylalkyl group is preferably 1 or more and 8 or less, more preferably 1 or more and 4 or less, and particularly preferably 2. Among cycloalkylalkyl groups, a cyclopentylethyl group is preferable. The number of carbon atoms in the alkylene group included in the phenylthioalkyl group which may have a substituent on the aromatic ring is preferably 1 or more and 8 or less, more preferably 1 or more and 4 or less, and particularly preferably 2. Among the phenylthioalkyl groups which may have a substituent on the aromatic ring, a 2-(4-chlorophenylthio)ethyl group is preferred.

In the group represented by the formula (c3), when there is a plurality of R^{c5}s and the plurality of R^{c5}s bonds to each other to form a ring, examples of the ring formed include a hydrocarbon ring, a heterocyclic ring, and the like. As a heteroatom included in the heterocycle, for example, N, O, and S is exemplified. An aromatic ring is particularly preferred as the ring formed by combining a plurality of R^{c5}s each other. Such an aromatic ring may be an aromatic hydrocarbon ring or an aromatic heterocyclic ring. Such an aromatic ring is preferably an aromatic hydrocarbon ring. Specific examples of the group in which a benzene ring is formed by combining a plurality of R^{c5}s in the formula (3) each other are shown below.

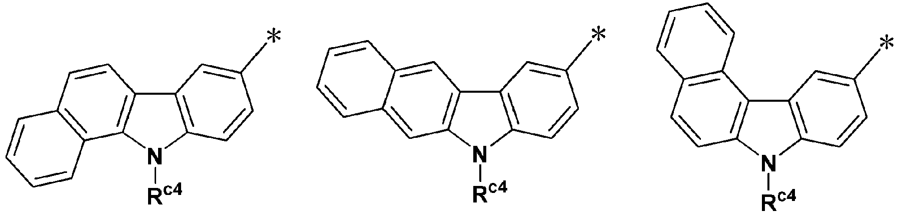

In a group represented by the formula (c4), R^{c8} is nitro group or a monovalent organic group. R^{c8} bonds to a 6-membered aromatic ring other than an aromatic ring that bonds to a group represented by -(CO)ₙ₁- on a condensed ring in the formula (c4). In the formula (c4), the bond position of R^{c8} is not particularly limited. When a group represented by the formula (c4) has 1 or more R^{c8}s, one of 1 or more R^{c8}s preferably bonds to 7-position in a fluorene skeleton from the viewpoint that a compound having the group represented by the formula (c4) can be easily synthesized. In other words, when a group represented by the formula (c4) has 1 or more R^{c8}s, the group represented by the formula (c4) is preferably a group represented by the formula (c6). When there is a plurality of R^{c8}s, plurality of substituents may be the same or different.

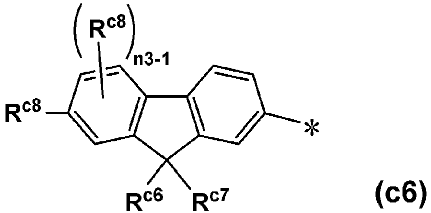

In the formula (c6), R^{c6}, R^{c7}, R^{c8}, and n3 are each independently the same as R^{c6}, R^{c7}, R^{c8}, and n3 in the formula (c4) .

When R^{c8} is the monovalent organic group, R^{c8} is not particularly limited as long as it does not interfere with the object of the present invention. As the organic group, a carbon atom-containing group is preferred, and a group consisting of 1 or more carbon atoms, and 1 or more atoms selected from the group consisting of H, O, S, Se, N, B, P, Si and a halogen atom is more preferred. The number of carbon atoms in the carbon atom-containing group is not particularly limited, and preferably 1 or more and 50 or less, and more preferably 1 or more and 20 or less. Suitable examples of the monovalent organic group as R^{c8} include the same groups as the examples of the monovalent organic group as R^{c5} in the formula (c3) .

In the formula (c4), R^{c6} and R^{c7} each represent an optionally substituted chain alkyl group, an optionally substituted chain alkoxy group, an optionally substituted cyclic organic group, or a hydrogen atom. R^{c6} and R^{c7} may be combined to one another to form a ring. Among these groups, R^{c6} and R^{c7} are preferably the optionally substituted chain alkyl groups. When R^{c6} and R^{c7} are the optionally substituted chain alkyl groups, the chain alkyl group may be either a straight-chain alkyl group or a branched-chain alkyl group.

When R^{c6} and R^{c7} are chain alkyl groups having no substituent, the number of carbon atoms in the chain alkyl group is preferably 1 or more and 20 or less, more preferably 1 or more and 10 or less, and particularly preferably 1 or more and 6 or less. When R^{c6} and R^{c7} are chain alkyl groups, specific examples thereof include methyl group, ethyl group, n-propyl group, isopropyl group, n-butyl group, isobutyl group, sec-butyl group, tert-butyl group, n-pentyl group, isopentyl group, sec-pentyl group, tert-pentyl group, n-hexyl group, n-heptyl group, n-octyl group, isooctyl group, sec-octyl group, tert-octyl group, n-nonyl group, isononyl group, n-decyl group, isodecyl group, and the like. When R^{c6} and R^{c7} are alkyl groups, the alkyl group may have an ether bond (-O-) in a carbon chain. Examples of the alkyl group having an ether bond in the carbon chain include methoxyethyl group, ethoxyethyl group, methoxyethoxyethyl group, ethoxyethoxyethyl group, propyloxyethoxyethyl group, methoxypropyl group, and the like.

When R^{c6} and R^{c7} are chain alkyl group having a substituent, the number of carbon atoms in the chain alkyl group is preferably 1 or more and 20 or less, more preferably 1 or more and 10 or less, and particularly preferably 1 or more and 6 or less. In this case, the number of carbon atoms in the substituent is not included in the number of carbon atoms in the chain alkyl group. The chain alkyl group having a substituent is preferably a straight-chain group.

The substituent, with which the alkyl group is optionally substituted, is not particularly limited as long as the object of the present invention is not inhibited. Suitable examples of the substituent include a cyano group, a halogen atom, a cyclic organic group, and an alkoxycarbonyl group. A fluorine atom, a chlorine atom, a bromine atom, and an iodine atom are exemplified as the halogen atom. Among these, the fluorine atom, the chlorine atom, and the bromine atom are preferred. A cycloalkyl group, an aromatic hydrocarbon group, and a heterocyclyl group are exemplified as the cyclic organic group. Specific examples of the cycloalkyl group are the same as the suitable examples of the cycloalkyl group as R^{c8}. Specific examples of the aromatic hydrocarbon group include phenyl group, naphthyl group, biphenylyl group, anthryl group, phenanthryl group, and the like. The specific examples of the heterocyclyl group are the same as the suitable examples of the heterocyclyl group as R^{c8}. When R^{c8} is an alkoxycarbonyl group, an alkoxy group included in the alkoxycarbonyl group may be straight or branched, and preferably straight. The number of carbon atoms in the alkoxy group included in the alkoxycarbonyl group is preferably 1 or more and 10 or less, and more preferably 1 or more and 6 or less.

When the chain alkyl group has one or more substituents, the number of substituents is not particularly limited. The preferred number of substituents depends on the number of carbon atoms in the chain alkyl group. The number of substituents is typically 1 or more and 20 or less, preferably 1 or more and 10 or less, and more preferably 1 or more and 6 or less.

When R^{c6} and R^{c7} are unsubstituted chain alkoxy group, the number of carbon atoms in the chain alkoxy group is preferably 1 or more and 20 or less, more preferably 1 or more and 10 or less, and particularly preferably 1 or more and 6 or less. When R^{c6} and R^{c7} are chain alkoxy group, specific examples thereof include methoxy group, ethoxy group, n-propyloxy group, isopropyloxy group, n-butyloxy group, isobutyloxy group, sec-butyloxy group, tert-butyloxy group, n-pentyloxy group, isopentyloxy group, sec-pentyloxy group, tert-pentyloxy group, n-hexyloxy group, n-heptyloxy group, n-octyloxy group, isooctyloxy group, sec-octyloxy group, tert-octyloxy group, n-nonyloxy group, isononyloxy group, n-decyloxy group, isodecyloxy group, and the like. In addition, when R^{c6} and R^{c7} are alkoxy group, the alkoxy group may include an ether bond (-O-) in the carbon chain. Examples of the alkoxy group having an ether bond in the carbon chain include methoxyethoxy group, ethoxyethoxy group, methoxyethoxyethoxy group, ethoxyethoxyethoxy group, propyloxyethoxyethoxy group, methoxypropyloxy group, and the like.

When R^{c6} and R^{c7} are chain alkoxy groups having a substituent, the substituent that the alkoxy group may have is the same as the substituent that the chain alkyl group as R^{c6} and R^{c7} may have.

When R^{c6} and R^{c7} are cyclic organic group, the cyclic organic group may be an alicyclic group or an aromatic group. Examples of the cyclic organic group include an aliphatic cyclic hydrocarbon group, an aromatic hydrocarbon group, and a heterocyclyl group. When R^{c6} and R^{c7} are cyclic organic group, the substituent, with which the cyclic organic group is optionally substituted, is the same as in the case where R^{c6} and R^{c7} are chain alkyl groups.

When R^{c6} and R^{c7} are the aromatic hydrocarbon groups, the aromatic hydrocarbon group is preferably a phenyl group, or a group formed by bonding plural benzene rings through a carbon-carbon bond, or a group formed by fusion of plural benzene rings. When the aromatic hydrocarbon group is a phenyl group, or a group formed by bonding or fusing plural benzene rings, the number of rings of a benzene ring included in the aromatic hydrocarbon group is not particularly limited, and is preferably 3 or less, more preferably 2 or less, and particularly preferably 1. Preferred specific examples of the aromatic hydrocarbon group include phenyl group, naphthyl group, biphenylyl group, anthryl group, phenanthryl group, and the like.

When R^{c6} and R^{c7} are aliphatic cyclic hydrocarbon groups, the aliphatic cyclic hydrocarbon group may be a monocyclic or polycyclic group. The number of carbon atoms in the aliphatic cyclic hydrocarbon group is not particularly limited, and is preferably 3 or more and 20 or less, and more preferably 3 or more and 10 or less. Examples of the monocyclic cyclic hydrocarbon group include cyclopropyl group, cyclobutyl group, cyclopentyl group, cyclohexyl group, cycloheptyl group, cyclooctyl group, norbornyl group, isobornyl group, tricyclononyl group, tricyclodecyl group, tetracyclododecyl group, and adamantyl group.

When R^{c6} and R^{c7} are heterocyclyl groups, the same groups as the heterocyclyl groups as R^{c5} in the formula (c3) are exemplified.

R^{c6} and R^{c7} may be combined to one another to form a ring. The group composed of the ring formed by R^{c6} and R^{c7} is preferably a cycloalkylidene group. When R^{c6} and R^{c7} are combined to form a cycloalkylidene group, the ring constituting the cycloalkylidene group is preferably a 5- to 6-membered ring, and more preferably a 5-membered ring.

When R^{c7} and a benzene ring in fluorene skeleton are combined to form a ring, the ring may be an aromatic ring or an aliphatic ring.

When the group formed by combining R^{c6} and R^{c7} is a cycloalkylidene group, the cycloalkylidene group may be condensed with one or more other rings. Examples of the ring which may be condensed with the cycloalkylidene group include benzene ring, naphthalene ring, cyclobutane ring, cyclopentane ring, cyclohexane ring, cycloheptane ring, cyclooctane ring, furan ring, thiophene ring, pyrrole ring, pyridine ring, pyrazine ring, pyrimidine ring, and the like.

Examples of a suitable group among R^{c6} and R^{c7} described above include a group represented by the formula: -A¹-A². In the formula, A¹ is a linear alkylene group. A² is an alkoxy group, cyano group, a halogen atom, a halogenated alkyl group, a cyclic organic group, or an alkoxycarbonyl group.

The number of carbon atoms in the linear alkylene group for A¹ is preferably 1 or more and 10 or less, and more preferably 1 or more and 6 or less. When A² is an alkoxy group, the alkoxy group may be any one of linear and branched alkoxy groups, and preferably a linear chain. The number of carbon atoms in the alkoxy group is preferably 1 or more and 10 or less, and more preferably 1 or more and 6 or less. When A² is a halogen atom, fluorine atom, chlorine atom, bromine atom, or iodine atom is preferred, and fluorine atom, chlorine atom, or bromine atom is more preferred. When A² is a halogenated alkyl group, a halogen atom included in the halogenated alkyl group is preferably fluorine atom, chlorine atom, bromine atom, or iodine atom, and more preferably is fluorine atom, chlorine atom, or bromine atom. The halogenated alkyl group may be linear or branched, preferably linear. When A² is a cyclic organic group, examples of the cyclic organic group are the same as the cyclic organic group possessed by R^{c6} and R^{c7} as a substituent. When A² is an alkoxycarbonyl group, examples of the alkoxycarbonyl group are the same as the alkoxycarbonyl group possessed by R^{c6} and R^{c7} as a substituent.

Suitable specific examples of R^{c6} and R^{c7} include alkyl groups such as ethyl group, n-propyl group, n-butyl group, n-hexyl group, n-heptyl group, and n-octyl group; alkoxyalkyl groups such as 2-methoxyethyl group, 3-methoxy-n-propyl group, 4-methoxy-n-butyl group, 5-methoxy-n-pentyl group, 6-methoxy-n-hexyl group, 7-methoxy-n-heptyl group, 8-methoxy-n-octyl group, 2-ethoxyethyl group, 3-ethoxy-n-propyl group, 4-ethoxy-n-butyl group, 5-ethoxy-n-pentyl group, 6-ethoxy-n-hexyl group, 7-ethoxy-n-heptyl group, and 8-ethoxy-n-octyl group; cyanoalkyl groups such as 2-cyanoethyl group, 3-cyano-n-propyl group, 4-cyano-n-butyl group, 5-cyano-n-pentyl group, 6-cyano-n-hexyl group, 7-cyano-n-heptyl group, and 8-cyano-n-octyl group; phenylalkyl groups such as 2-phenylethyl group, 3-phenyl-n-propyl group, 4-phenyl-n-butyl group, 5-phenyl-n-pentyl group, 6-phenyl-n-hexyl group, 7-phenyl-n-heptyl group, and 8-phenyl-n-octyl group; cycloalkylalkyl groups such as 2-cyclohexylethyl group, 3-cyclohexyl-n-propyl group, 4-cyclohexyl-n-butyl group, 5-cyclohexyl-n-pentyl group, 6-cyclohexyl-n-hexyl group, 7-cyclohexyl-n-heptyl group, 8-cyclohexyl-n-octyl group, 2-cyclopentylethyl group, 3-cyclopentyl-n-propyl group, 4-cyclopentyl-n-butyl group, 5-cyclopentyl-n-pentyl group, 6-cyclopentyl-n-hexyl group, 7-cyclopentyl-n-heptyl group, and 8-cyclopentyl-n-octyl group; alkoxycarbonylalkyl groups such as 2-methoxycarbonylethyl group, 3-methoxycarbonyl-n-propyl group, 4-methoxycarbonyl-n-butyl group, 5-methoxycarbonyl-n-pentyl group, 6-methoxycarbonyl-n-hexyl group, 7-methoxycarbonyl-n-heptyl group, 8-methoxycarbonyl-n-octyl group, 2-ethoxycarbonylethyl group, 3-ethoxycarbonyl-n-propyl group, 4-ethoxycarbonyl-n-butyl group, 5-ethoxycarbonyl-n-pentyl group, 6-ethoxycarbonyl-n-hexyl group, 7-ethoxycarbonyl-n-heptyl group, and 8-ethoxycarbonyl-n-octyl group; and halogenated alkyl groups such as 2-chloroethyl group, 3-chloro-n-propyl group, 4-chloro-n-butyl group, 5-chloro-n-pentyl group, 6-chloro-n-hexyl group, 7-chloro-n-heptyl group, 8-chloro-n-octyl group, 2-bromoethyl group, 3-bromo-n-propyl group, 4-bromo-n-butyl group, 5-bromo-n-pentyl group, 6-bromo-n-hexyl group, 7-bromo-n-heptyl group, 8-bromo-n-octyl group, 3,3,3-trifluoropropyl group, and 3,3,4,4,5,5,5-heptafluoro-n-pentyl group.

Among groups described above, suitable groups as R^{c6} and R^{c7} are ethyl group, n-propyl group, n-butyl group, n-pentyl group, 2-methoxyethyl group, 2-cyanoethyl group, 2-phenylethyl group, 2-cyclohexylethyl group, 2-methoxycarbonylethyl group, 2-chloroethyl group, 2-bromoethyl group, 3,3,3-trifluoropropyl group, and 3,3,4,4,5,5,5-heptafluoro-n-pentyl group.

From the view point that a highly sensitive photo polymerization initiator is likely to be easily obtained, A is preferably S.

In the formula (c5), R^{c9} is a monovalent organic group, a halogen atom, nitro group, or cyano group. When R^{c9} in the formula (c5) is the monovalent organic group, the monovalent organic group can be selected from various organic groups as long as it does not interfere with the object of the present invention. As the organic group, a carbon atom-containing group is preferred, and a group consisting of 1 or more carbon atoms, and 1 or more atoms selected from the group consisting of H, O, S, Se, N, B, P, Si and a halogen atom is more preferred. The number of carbon atoms in the carbon atom-containing group is not particularly limited, and is preferably 1 or more and 50 or less, and more preferably 1 or more and 20 or less. Suitable examples of the organic group as R^{c9} in the formula (c5) are the same groups as the monovalent organic groups as R^{c5} in the formula (c3).

Among R^{c9}, benzoyl group; naphthoyl group; benzoyl groups substituted with a group selected from the group consisting of an alkyl group having 1 or more and 6 or less carbon atoms, morpholine-1-yl group, piperazine-1-yl group, and a phenyl group; nitro group; optionally substituted benzofuranylcarbonyl group are preferred, and benzoyl group; naphthoyl group; 2-methylphenylcarbonyl group; 4-(piperazine-1-yl)phenylcarbonyl group; and 4-(phenyl)phenylcarbonyl group are more preferred.

In addition, in the formula (c5), n4 is preferably an integer of 0 or more and 3 or less, more preferably an integer of 0 or more and 2 or less, and particularly preferably 0 or 1. When n4 is 1, the position at which R^{c9} bonds is preferably the para-position relative to the bonding through which the phenyl group (to which R^{c9} bonds) bonds to oxygen atom or sulfur atom.

In the formula (c1) and the formula (c2), the monovalent organic group as R^{c2} is not particularly limited as long as it does not interfere with the object of the present invention. As the organic group, a carbon atom-containing group is preferred, and a group consisting of 1 or more carbon atoms, and 1 or more atoms selected from the group consisting of H, O, S, Se, N, B, P, Si and a halogen atom is more preferred. The number of carbon atoms in the carbon atom-containing group is not particularly limited, and is preferably 1 or more and 50 or less, and more preferably 1 or more and 20 or less. Suitable examples of the monovalent organic group as R^{c2} are the same groups as the monovalent organic groups as R^{c5} in the formula (c3). Specific examples of these groups are the same as the groups described for R^{c5} in the formula (c3). In addition, R^{c2} is also preferably a cycloalkylalkyl group, a phenoxyalkyl group which may have a substituent on the aromatic ring, and a phenylthioalkyl group which may have a substituent on the aromatic ring. The substituent that the phenoxyalkyl group and phenylthioalkyl group may have is the same as the substituent that the phenyl group, the naphthyl group, and the heterocyclyl group included in R^{c5} in the formula (c3) may have.

Among substituents, a substituent including the group represented by HX₂C- or H₂XC- described above, an alkyl group, a cycloalkyl group, an optionally substituted phenyl group, an optionally substituted cycloalkyl group, and a phenylthioalkyl group that may have a substituent on an aromatic ring are preferred. The alkyl group, the optionally substituted alkyl group, the number of carbon atoms in the cycloalkyl group included in the cycloalkylalkyl group, the cycloalkylalkyl group, the number of carbon atoms in the alkylene group included in the phenylthioalkyl group that may have a substituent on an aromatic ring, and the phenylthioalkyl group that may have a substituent on an aromatic ring are the same as these about R^{c5} in the formula (c3).

R^{c2} is also preferably a group represented by -A³-CO-O-A⁴. A³ is a divalent organic group, preferably a divalent hydrocarbon group, and more preferably an alkylene group. A⁴ is a monovalent organic group, and preferably a monovalent hydrocarbon group.

When A³ is the alkylene group, the alkylene group may be linear or branched, and is preferably linear. When A³ is the alkylene group, the number of carbon atoms in the alkylene group is preferably 1 or more and 10 or less, more preferably 1 or more and 6 or less, and particularly preferably 1 or more and 4 or less.

Suitable examples of A⁴ include an alkyl group having 1 or more and 10 or less carbon atoms, an aralkyl group having 7 or more and 20 or less carbon atoms, and an aromatic hydrocarbon group having 6 or more and 20 or less carbon atoms. Suitable specific examples of A⁴ include methyl group, ethyl group, n-propyl group, isopropyl group, n-butyl group, isobutyl group, sec-butyl group, tert-butyl group, n-pentyl group, n-hexyl group, phenyl group, naphthyl group, benzyl group, phenethyl group, α-naphthylmethyl group, β-naphthylmethyl group, and the like.

Suitable specific examples of the group represented by - A³-CO-O-A⁴ include 2-methoxycarbonylethyl group, 2-ethoxycarbonylethyl group, 2-n-propyloxycarbonylethyl group, 2-n-butyloxycarbonylethyl group, 2-n-pentyloxycarbonylethyl group, 2-n-hexyloxycarbonylethyl group, 2-benzyloxycarbonylethyl group, 2-phenoxycarbonylethyl group, 3-methoxycarbonyl-n-propyl group, 3-ethoxycarbonyl-n-propyl group, 3-n-propyloxycarbonyl-n-propyl group, 3-n-butyloxycarbonyl-n-propyl group, 3-n-pentyloxycarbonyl-n-propyl group, 3-n-hexyloxycarbonyl-n-propyl group, 3-benzyloxycarbonyl-n-propyl group, 3-phenoxycarbonyl-n-propyl group, and the like.

A group represented by following formula (c7) or (c8) is also preferred as R^{c2}.

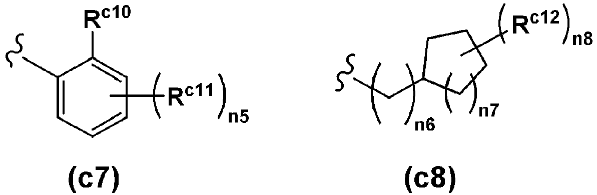

In the formulas (c7) and (c8), R^{c10} and R^{c11} are each independently a monovalent organic group. n5 is an integer of 0 or more and 4 or less. When R^{c10} and R^{c11} are adjacent to each other on the benzene ring, R^{c10} and R^{c11} may be combined to each other to form a ring. R^{c12} in a monovalent organic group. n6 is an integer of 1 or more and 8 or less. n7 is an integer of 1 or more and 5 or less. n8 is an integer of 0 or more and (n7+3) or less.

The organic group as R^{c10} and R^{c11} in the formula (c7) is the same as R^{c8} in the formula (c4). As R^{c10}, a halogenated alkoxy group including a group represented by HX₂C- or H₂XC-, a halogenated alkyl group including a group represented by HX₂C- or H₂XC-, an alkyl group, or a phenyl group is preferred. When R^{c10} and R^{c11} are combined to each other to form a ring, the ring may be an aromatic ring or an aliphatic ring. Suitable examples of the group represented by the formula (c7) in which R^{c10} and R^{c11} form a ring include a naphthalen-1-yl group, a 1,2,3,4-tetrahydronaphthalene-5-yl group, and the like. In the above formula (c7), n7 is an integer of 0 or more and 4 or less, preferably 0 or 1, and more preferably 0.

In the above formula (c8), R^{c12} is an organic group. As the organic group, the same group as the organic group described above as R^{c8} in the formula (c4) is exemplified. Among the organic groups, an alkyl group is preferred. The alkyl group may be straight or branched. The number of carbon atoms in the alkyl group is preferably 1 or more and 10 or less, more preferably 1 or more and 5 or less, and particularly preferably 1 or more and 3 or less. Methyl group, ethyl group, propyl group, isopropyl group, butyl group, and the like are preferably exemplified as R^{c12}. Among these, methyl group is preferred.

In the above formula (c8), n7 is an integer of 1 or more and 5 or less, preferably an integer of 1 or more and 3 or less, and more preferably 1 or 2. In the above formula (c8), n8 is 0 or more and (n7+3) or less, preferably an integer of 0 or more and 3 or less, more preferably an integer of 0 or more and 2 or less, and particularly preferably 0. In the above formula (c8), n6 is an integer of 1 or more and 8 or less, preferably an integer of 1 or more and 5 or less, further preferably an integer of 1 or more and 3 or less, and particularly preferably 1 or 2.

In the formula (c2), R^{c3} is hydrogen atom, an optionally substituted aliphatic hydrocarbon group having 1 or more and 20 or less carbon atoms, or an optionally substituted aryl group. When R^{c3} is the aliphatic hydrocarbon group, preferable examples of the substituent which may be possessed by the aliphatic hydrocarbon group includes phenyl group, naphthyl group, and the like.

In the formula (c1) and (c2), suitable examples of R^{c3} include hydrogen atom, methyl group, ethyl group, n-propyl group, isopropyl group, n-butyl group, 2-cyclopentylethyl group, 2-cyclobutylethyl group, cyclohexylmethyl group, phenyl group, benzyl group, methylphenyl group, naphthyl group, and the like. Among these, methyl group or phenyl group is more preferred.

Suitable specific examples of the compound represented by the formula (c2) and having the group represented by the formula (c3) as R^{c1} include following compounds.

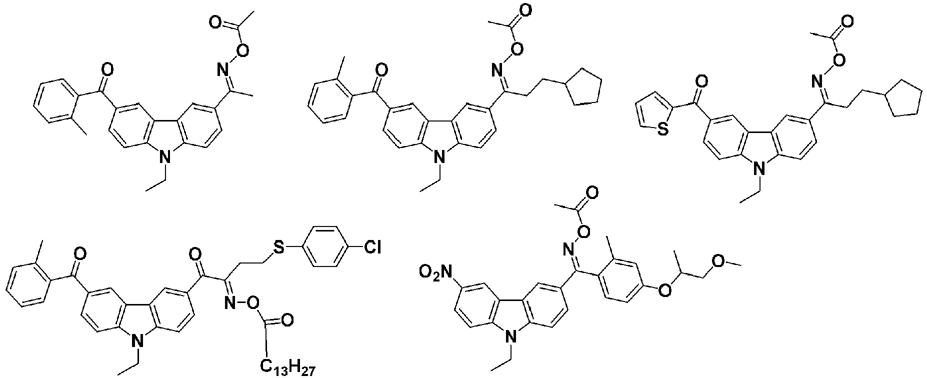

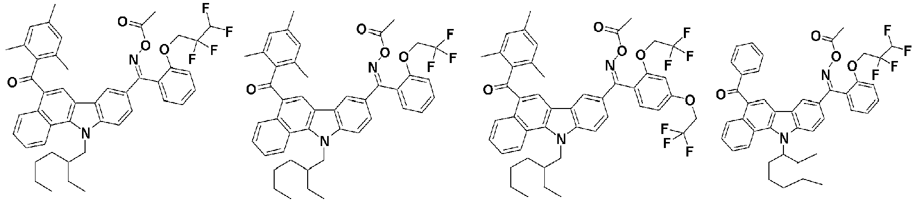

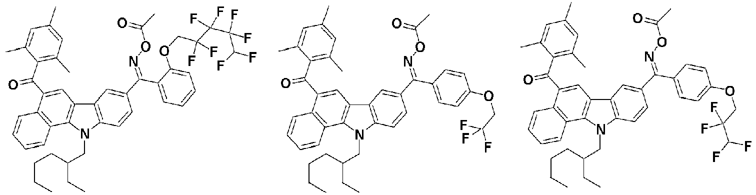

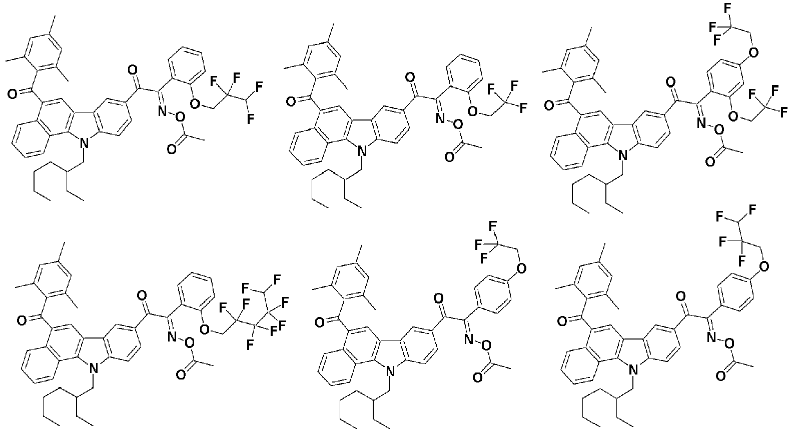

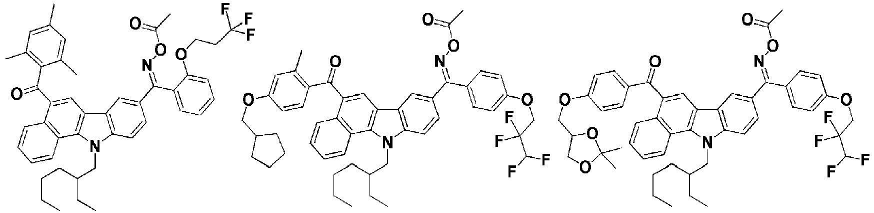

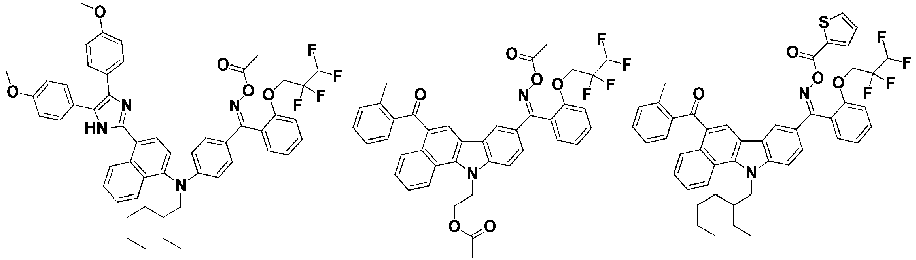

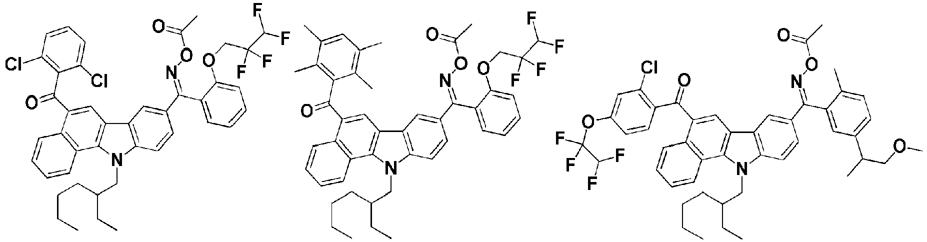

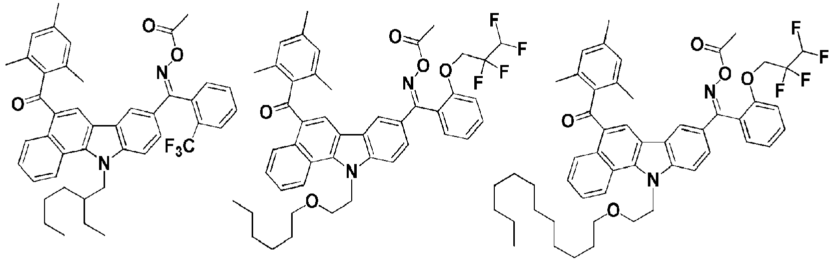

Preferable specific examples of the compound represented by the formula (c2) and having the group represented by the formula (c4) as R^{c1} include following compounds.

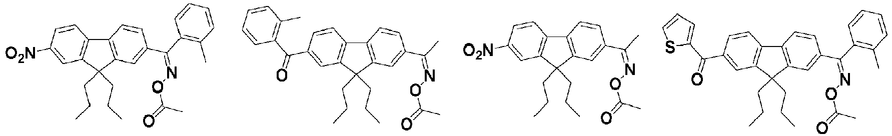

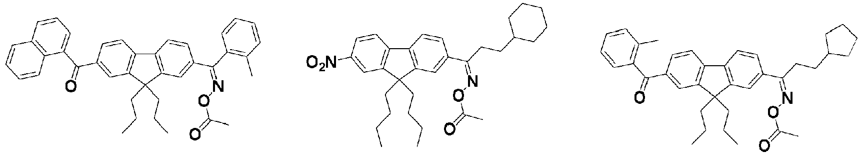

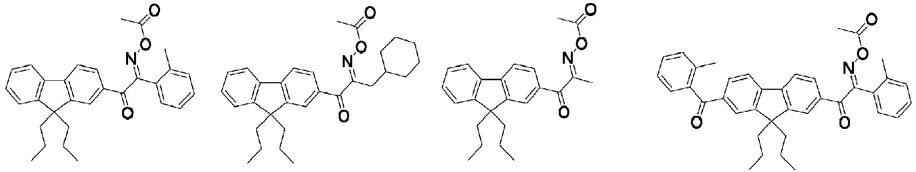

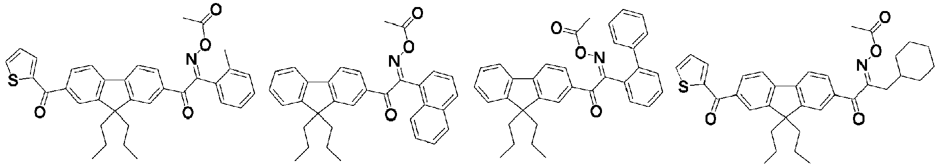

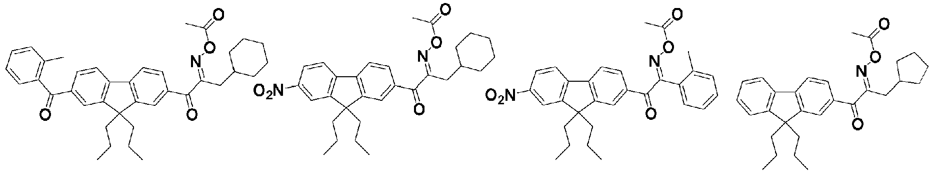

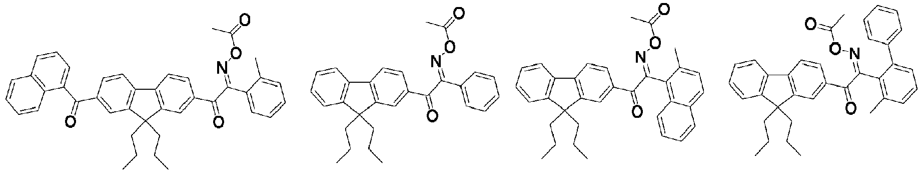

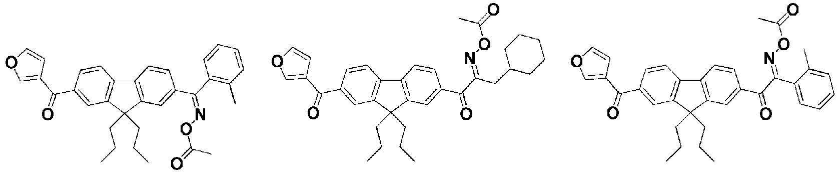

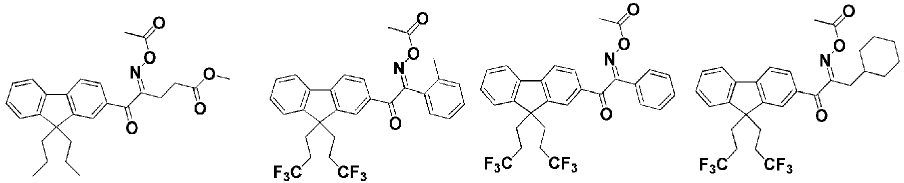

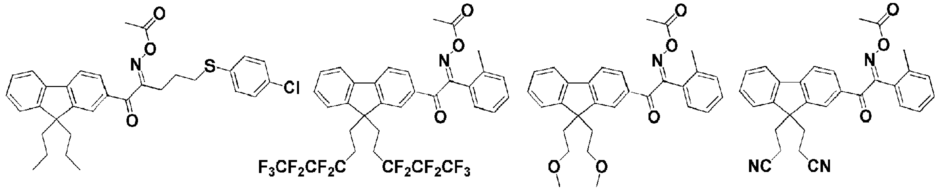

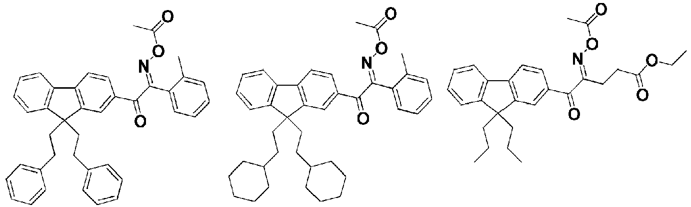

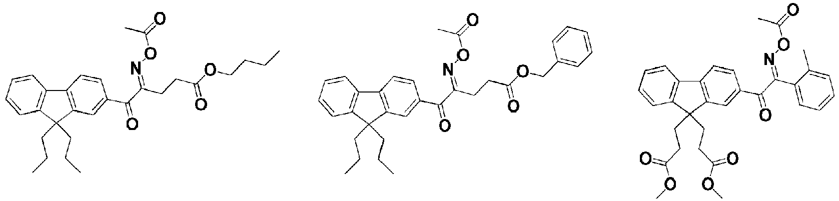

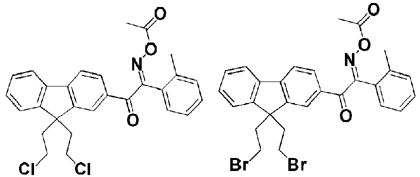

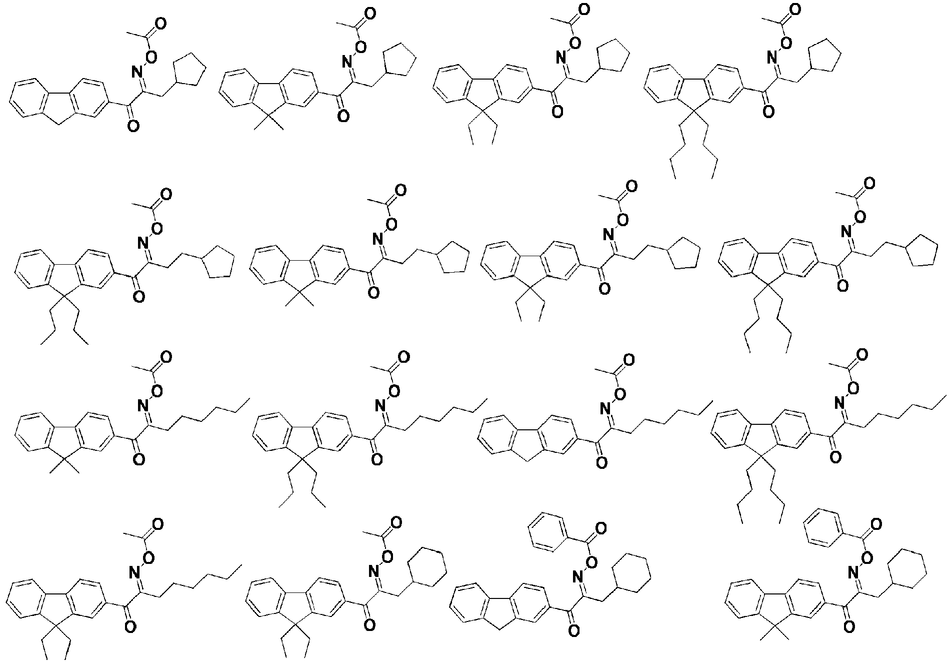

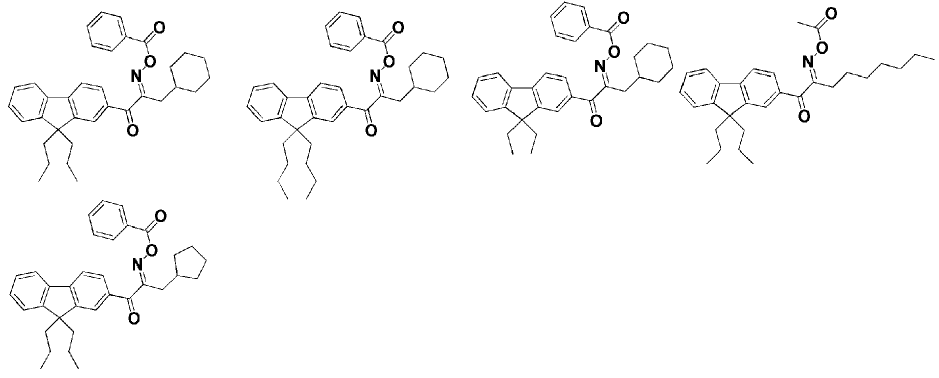

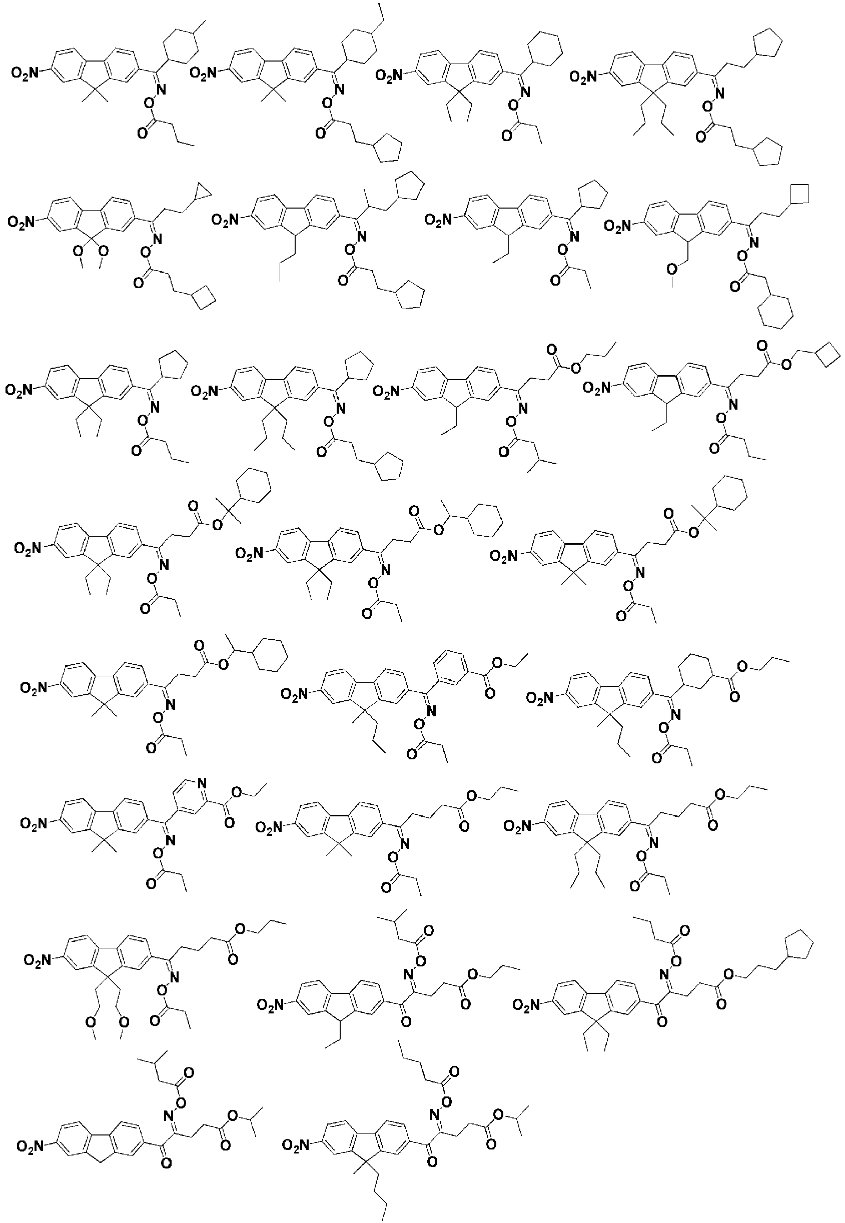

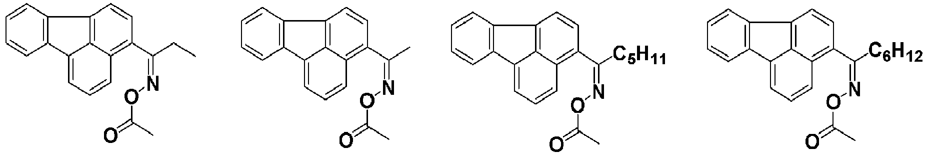

Preferable specific examples of the compound represented by the formula (c2) and having the group represented by the formula (c5) as R^{c1} include following compounds.

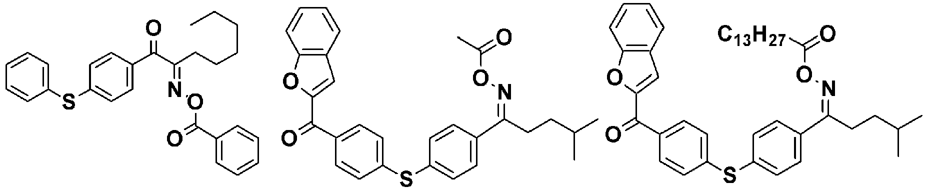

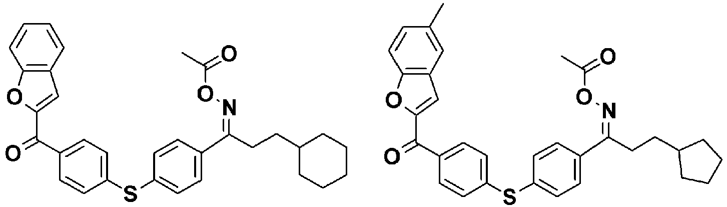

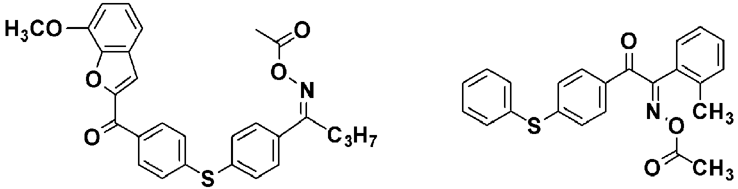

As the photopolymerization initiator (C), in view of good deeply curing property of the photocurable liquid composition, a phosphine oxide compound is also preferred. As the phosphine oxide compound, a phosphine oxide compound including a partial structure represented by following formula (c9).

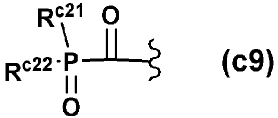

In the formula (c9), R^{c21} and R^{c22} are each independently an alkyl group, a cycloalkyl group, an aryl group, an aliphatic acyl group having 2 or more and 20 or less carbon atoms, or an aromatic acyl group having 7 or more and 20 or less carbon atoms. Provided that, both of R^{c21} and R^{c22} are the aliphatic acyl group or the aromatic aryl group.

A number of carbon atoms in the alkyl group as R^{c21} and R^{c22} is preferably 1 or more and 12 or less, more preferably 1 or more and 8 or less, and further preferably 1 or more and 4 or less. The alkyl group as R^{c21} and R^{c22} may be linear or branched. Specific examples of the alkyl group include methyl group, ethyl group, n-propyl group, isopropyl group, n-butyl group, isobutyl group, sec-butyl group, tert-butyl group, n-pentyl group, isopentyl group, tert-pentyl group, n-hexyl group, n-heptyl group, n-octyl group, 2,4,4-trimethylpentyl group, 2-ethylhexyl group, n-nonyl group, n-decyl group, n-undecyl group, and n-dodecyl group.

The number of carbon atoms of the cycloalkyl group as R^{c21} and R^{c22} is preferably 5 or more and 12 or less. Specific examples of the cycloalkyl group include a cyclopentyl group, a cyclohexyl group, a cycloheptyl group, a cyclooctyl group, a cyclononyl group, a cyclodecyl group, a cycloundecyl group, and a cyclododecyl group.

The number of carbon atoms of the aryl group as R^{c21} and R^{c22} is preferably 6 or more and 12 or less. The aryl group may have a substituent. Examples of the substituent include a halogen atom, an alkyl group having 1 or more and 4 or less carbon atoms, an alkoxy group having 1 or more and 4 or less carbon atoms, and the like. Specific examples of the aryl group include a phenyl group and a naphthyl group.

The number of carbon atoms in the aliphatic acyl group as R^{c21} and R^{c22} is 2 or more and 20 or less, preferably 2 or more and 12 or less, more preferably 2 or more and 8 or less, and further preferably 2 or more and 6 or less. The aliphatic acyl group can be liner or branched. Specific examples of the aliphatic acyl group include acetyl group, propionyl group, butanoyl group, pentanoyl group, hexanoyl group, heptanoyl group, octanoyl group, nonanoyl group, decanoyl group, undecanoyl group, dodecanoyl group, tridecanoyl group, tetradecanoyl group, pentadecanoyl group, hexadecanoyl group, heptadecanoyl group, octadecanoyl group, nonadecanoyl group, and icosanoyl group.

The number of carbon atoms in the aromatic acyl group as R^{c21} and R^{c22} is 7 or more and 20. The aromatic acyl group may have a substituent. Examples of the substituent include a halogen atom, an alkyl group having 1 or more and 4 or less carbon atoms, an alkoxy group having 1 or more and 4 or less carbon atoms, and the like. Specific examples of the aromatic acyl group include benzoyl group, o-tolyl group, m-tolyl group, p-tolyl group, 2,6-dimethylbenzoyl group, 2,6-dimethoxybenzoyl group, 2,4,6-trimethylbenzoyl group, α-naphthoyl group, and β-naphthoyl group.

Suitable specific examples of the phosphine oxide compound having the partial structure represented by the formula (c9) include 2,4,6-trimethylbenzoyldiphenylphosphineoxide, bis(2,4,6-trimethylbenzoyl)-phenylphosphineoxide, bis(2,6-dimethoxybenzoyl)-2,4,4-trimethyl-pentylphosphineoxide, and the like.

A content of the photopolymerization initiator (C) is preferably 0.5 % by mass or more and 30 % by mass or less, and more preferably 1 % by mass or more and 20% by mass or less relative to the mass of the photocurable liquid composition excluding the mass of the organic solvent (S) described later (total solid content). When the content of the photopolymerization initiator (C) is in the above range, it is possible to obtain the photocurable liquid composition with good curability.

The photopolymerization initiator (C) may be used in combination with a photoinitiator aid. Examples of the photoinitiator aid include triethanolamine, methyldiethanolamine, triisopropanolamine, methyl 4-dimethylaminobenzoate, ethyl 4-dimethylaminobenzoate, isoamyl 4-dimethylaminobenzoate, 2-ethylhexyl 4-dimethylaminobenzoate, 2-dimethylaminoethyl 4-dimethylaminobenzoate, N,N-dimethylparatoluidine, 4,4'-bis(dimethylamino)benzophenone, 9,10-dimethoxyanthracene, 2-ethyl-9,10-dimethoxyanthracene, 9,10-diethoxyanthracene, and 2-ethyl-9,10-diethoxyanthracene; thiol compounds such as 2-mercaptobenzothiazole, 2-mercaptobenzoxazole, 2-mercaptobenzimidazole, 2-mercapto-5-methoxybenzothiazole, 3-mercaptopropionic acid, methyl 3-mercaptopropionate, pentaerythritol tetramercaptoacetate, and 3-mercaptopropionate, and the like. These photoinitiator aids may be used either individually or in combination of two or more.

### <Plasticizer (D)>

The photocurable liquid composition may include a plasticizer. The plasticizer (D) is a component which lowers a viscosity of the photocurable liquid composition without significantly compromising curability of the photocurable liquid composition and a refractive index of the cured product.

The plasticizer (D) is preferably a compound represented by following formula (d-1).

R^{d1}-R^{d3}ᵣ-X^{d}-R^{d4}ₛ-R^{d2} (d-1)

In the formula (d-1), R^{d1} and R^{d2} are each independently phenyl group optionally substituted with 1 or more and 5 or less substituents. The substituent is selected from an alkyl group having 1 or more and 4 or less carbon atoms, an alkoxy group having 1 or more and 4 or less carbon atoms, and a halogen atom. R^{d3} and R^{d4} are each independently methylene group or ethane-1,2-diyl group. r and s are each independently 0 or 1. X^{d} is oxygen atom or sulfur atom.

By inclusion of the plasticizer (D) in the photocurable liquid composition, the photocurable liquid composition can be made low viscosity without significantly compromising various properties such as curability of the photocurable liquid composition and high refractive index of the cured product. From the viewpoint of low viscosity of the photocurable liquid composition, the viscosity of the plasticizer (D) measured by an E-type viscometer at 25 °C is preferably 10 cP or less, more preferably 8 cP or less, and further preferably 6 cP or less. From the viewpoint that the plasticizer (D) is less likely to volatilize and an effect of lowering the viscosity of the photocurable liquid composition can be easily maintained, the boiling point of the plasticizer (D) under atmospheric pressure is preferably 250 °C or higher, and more preferably 260°C or higher. Upper limit of the boiling point under atmospheric pressure of the plasticized (D) is not particularly limited, and may be 300 °C or lower, or 350 °C or lower, for example.

R^{d1} and R^{d2} in the formula (d-1) are each independently a phenyl group optionally substituted with 1 or more and 5 or less substituents. The substituent bonding to the phenyl group is a group selected from an alkyl group having 1 or more and 4 or less carbon atoms, an alkoxy group having 1 or more and 4 or less carbon atoms, and a halogen atom. When the phenyl group has the substituent, a number of substituents is not particularly limited. The number of substituents is 1 or more and 5 or less, preferably 1 or 2, and preferably 1. In view of lower viscosity of the photocurable liquid composition, R^{d1} and R^{d2} are respectively preferably unsubstituted phenyl group.

Examples of the alkyl group having 1 or more and 4 or less carbon atoms as the substituent include methyl group, ethyl group, n-propyl group, isopropyl group, n-butyl group, isobutyl group, sec-butyl group, and tert-butyl group. Examples of the alkoxy group having 1 or more and 4 or less carbon atoms as the substituent include methoxy group, ethoxy group, n-propyloxy group, isopropyloxy group, n-butyloxy group, isobutyloxy group, sec-butyloxy group, and tert-butyloxy group. Examples of the halogen atom as the substituent include fluorine atom, chlorine atom, bromine atom, and iodine atom.

R^{d3} and R^{d4} in the formula (d-1) are each independently methylene group or ethane-1,2-diyl group. In addition, r and s are each independently 0 or 1. X^{d} in the formula (d-1) is oxygen atom or sulfur atom.

Suitable specific examples of the compound represented by the formula (d-1) described above include diphenyl ether, diphenyl sulfide, dibenzyl ether, dibenzyl sulfide, diphenethyl ether, and diphenethyl sulfide. Among these, diphenyl sulfide and/or dibenzyl ether are preferred.

In view of adjusting viscosity and dispersibility of the metal oxide nanoparticles (B), a content of the plasticizer (D) in the photocurable liquid composition is preferably more than 0 % by mass and 35 % by mass or less, and more preferably 5 % by mass or more and 15 % by mass or less.

### <Nitrogen-containing compound (E)>

In order to more easily suppress localization of the metal oxide nanoparticles (B) in the cured product, the photocurable liquid composition may include an amine compound represented by following formula (e1) and/or an imine compound represented by following formula (e2) as a nitrogen-containing compound (E) .

NR^{e1}R^{e2}R^{e3} (e1)

In the formula (e1), R^{e1}, R^{e2}, and R^{e3} are each independently a hydrogen atom or an organic group.

R^{e4}-N=CR^{e5}R^{e6} (e2)

In the formula (e2), R^{e4}, R^{e5}, and R^{e6} are each independently a hydrogen atom or an organic group.

In the formula (e1), and formula (e2), when R^{e1}, R^{e2}, R^{e3}, R^{e4}, R^{e5}, and R^{e6} are the organic group, the organic group can be selected from various organic groups as long as the desired effect is not impaired. As the organic group, a carbon atom-containing group is preferred, and a group consisting of 1 or more carbon atoms, and 1 or more atoms selected from the group consisting of H, O, S, Se, N, B, P, Si and a halogen atom is more preferred. The number of carbon atoms in the carbon atom-containing group is not particularly limited, and preferably 1 or more and 50 or less, and more preferably 1 or more and 20 or less. Suitable examples of the organic group include an alkyl group, a cycloalkyl group, an optionally substituted phenyl group, an optionally substituted phenylalkyl group, an optionally substituted naphthyl group, an optionally substituted naphthylalkyl group, an optionally substituted heterocyclyl group, and the like.

A number of carbon atoms in the alkyl group as the organic group is preferably 1 or more and 20 or less, and more preferably 1 or more and 6 or less. Structure of the alkyl group may be straight or branched. Specific examples of the alkyl group include methyl group, ethyl group, n-propyl group, isopropyl group, n-butyl group, isobutyl group, sec-butyl group, tert-butyl group, n-pentyl group, isopentyl group, sec-pentyl group, tert-pentyl group, n-hexyl group, n-heptyl group, n-octyl group, n-isooctyl group, sec-octyl group, tert-octyl group, n-nonyl group, n-decyl group, isodecyl group, and the like. In addition, the alkyl group may include an ether bond (-O-) in the carbon chain. Examples of the alkyl group having an ether bond in the carbon chain include methoxyethyl group, ethoxyethyl group, methoxyethoxyethyl group, ethoxyethoxyethyl group, propyloxyethoxyethyl group, methoxypropyl group, and the like.

A number of carbon atoms in the cycloalkyl group as the organic group is preferably 3 or more and 10 or less, and more preferably 3 or more and 6 or less. Specific examples of the cycloalkyl group include cyclopropyl group, cyclobutyl group, cyclopentyl group, cyclohexyl group, cycloheptyl group, cyclooctyl group, and the like.

A number of carbon atoms in the phenylalkyl group as the organic group is preferably 7 or more and 20 or less, and more preferably 7 or more and 10 or less. A number of carbon atoms in the naphthylalkyl group as the organic group is preferably 11 or more and 20 or less, and more preferably 11 or more and 14 or less. Specific examples of the phenylalkyl group include benzyl group, 2-phenylethyl group, 3-phenylpropyl group, and 4-phenylbutyl group. Specific example of the naphthylalkyl group include α-naphthylmethyl group, β-naphthylmethyl group, 2-(α-naphthyl)ethyl group, and 2-(β-naphthyl)ethyl group. The phenylalkyl group or the naphthylalkyl group may have a substituent on phenyl group or naphthyl group.

When the organic group is a heterocyclyl group, the heterocyclyl group is the same as the heterocyclyl group as R^{c4} in the formula (c3), and may further have a substituent.

The heterocyclyl group as the organic group may be an aliphatic heterocyclic group or an aromatic heterocyclic group. The heterocyclyl group is preferably a heterocyclyl group consisting of 5- or 6-membered single ring including one or more of N, S, and O, or a fused ring in which above single rings are fused each other, or a above single ring is fused with a benzene ring. When the heterocyclyl group is a fused ring, the number of rings constituting the fused ring is 3 or less. Examples of the heterocycle constituting the heterocyclyl group include furan, thiophene, pyrrole, oxazole, isoxazole, thiazole, thiadiazole, isothiazole, imidazole, pyrazole, triazole, pyridine, pyrazine, pyrimidine, pyridazine, benzofuran, benzothiophene, indole, isoindole, indolizine, benzimidazole, benzotriazole, benzoxazole, benzothiazole, carbazole, purine, quinoline, isoquinoline, quinazoline, phthalazine, cinnoline, quinoxaline, piperidine, piperazine, morpholine, piperidine, tetrahydropyran, tetrahydrofuran, and the like.

When phenyl group, naphthyl group, and heterocyclyl group included in the above organic group have substituent, examples of the substituent include an alkyl group having 1 or more and 6 or less carbon atoms, an alkoxy group having 1 or more and 6 or less carbon atoms, a halogenated alkyl group having 1 or more and 6 or less carbon atoms, a halogenated alkoxy group having 1 or more and 6 or less carbon atoms, a saturated aliphatic acyl group having 2 or more and 7 or less carbon atoms, an alkoxycarbonyl group having 2 or more and 7 or less carbon atoms, a saturated aliphatic acyloxy group having 2 or more and 7 or less carbon atoms, a monoalkylamino group having an alkyl group having 1 or more and 6 or less carbon atoms, a dialkylamino group having alkyl groups respectively having 1 or more and 6 or less carbon atoms, a benzoyl group, a halogen atom, a nitro group, a cyano group, and the like. When a phenyl group, a naphthyl group, and a heterocyclyl group included in the organic group have one or more substituents, a number of the substituents is not particularly limited, and preferably 1 or more and 4 or less. When a phenyl group, naphthyl group, and a heterocyclyl group included in the organic group have a plurality of substituents, the plurality of substituents may be the same or different.

In the formula (e1), R^{e1}, R^{e2}, and R^{e3} are each independently a hydrogen atom or an organic group, and at least one of R^{e1}, R^{e2}, and R^{e3} is an aromatic group-containing group. In addition, in the formula (e2), R^{e4}, R^{e5}, and R^{e6} are each independently a hydrogen atom or an organic group, and at least one of R^{e4}, R^{e5}, and R^{e6} is an aromatic group-containing group. The aromatic ring in the aromatic ring-containing group may be an aromatic hydrocarbon ring or an aromatic heterocycle. The aromatic ring-containing group is preferably a hydrocarbon group. As the aromatic ring-containing group, an aromatic hydrocarbon group (aryl group) and an aralkyl group are preferred. Examples of the aromatic hydrocarbon group include phenyl group, naphthalene-1-yl group, and naphthalene-2-yl group. Among these aromatic hydrocarbon group, phenyl group is preferred. Examples of the aralkyl group include benzyl group, 2-phenylethyl group, 3-phenylpropyl group, and 4-phenylbutyl group.

In the formula (e1), at least one of R^{e1}, R^{e2}, and R^{e3} is preferably a group represented by -Ar^{e1}-CH₂-. In addition, in the formula (e2), R^{e4} is preferably a group represented by - Ar^{e1}-CH₂-. Ar^{e1} is an optionally substituted aromatic group. The aromatic group as Ar^{e1} may be an aromatic hydrocarbon group, or an aromatic heterocyclic group. As the aromatic group as Ar^{e1}, an aromatic hydrocarbon group is preferred. Examples of the aromatic hydrocarbon group include phenyl group, naphthalene-1-yl group, and naphthalene-2-yl group. Among these aromatic hydrocarbon group, phenyl group is preferred. The substituent which the aromatic group as Ar^{e1} may have is the same as the substituent which phenyl group, naphthyl group, and heterocyclyl group may have in case that the organic group as R^{e1}, R^{e2}, R^{e3}, R^{e4}, R^{e5}, and R^{e6} is phenyl group, naphthyl group, or heterocyclyl group.

Suitable specific examples of the amine compound represented by the formula (e1) include triphenylamine, N,N-diphenylbenzylamine, N-phenylbenzylamine, tribenzylamine, N,N-dimethylphenylamine, N-methyldiphenylamine, N,N-dimethylbenzylamine, N-methyldibenzylamine, N-methyl-N-benzylphenylamine, N-ethyldiphenylamine, N,N-diethylphenylamine, N-ethyldiphenylamine, N,N-diethylbenzylamine, N-ethyldibenzylamine, and N-ethyl-N-benzylphenylamine.

Suitable specific examples of the imine compound represented by the formula (e2) include N-benzylphenylmethaneimine, N-benzyldiphenylmethaneimine, N-benzyl-1-phenylethaneimine, and N-benzylpropane-2-imine.

A content of the nitrogen-containing compound is not particularly limited as long as the desired effect is not impaired. A content of the nitrogen-containing compound (E) is preferably 5 % by mass or more and 25 % by mass or less, and more preferably 7 % by mass or more and 20 % by mass or less relative to the mass of the photopolymerizable monomer (A) .

### <Solvent (S)>

The photocurable liquid composition may include the solvent (S) in an amount of 5 % by mass or less relative to the mass of the photocurable liquid composition. Type of the solvent (S) is not particularly limited, and typically an organic solvent.

Examples of the organic solvent that can be included in the photocurable liquid composition include (poly)alkylene glycol monoalkyl ethers such as ethylene glycol monomethyl ether, ethylene glycol monoethyl ether, ethylene glycol n-propyl ether, ethylene glycol mono-n-butyl ether, diethylene glycol monomethyl ether, diethylene glycol monoethyl ether, diethylene glycol mono-n-propyl ether, diethylene glycol mono-n-butyl ether, triethylene glycol monomethyl ether, triethylene glycol monoethyl ether, propylene glycol monomethyl ether, propylene glycol monoethyl ether, propylene glycol mono-n-propyl ether, propylene glycol mono-n-butyl ether, dipropylene glycol monomethyl ether, dipropylene glycol monoethyl ether, dipropylene glycol mono-n-propyl ether, dipropylene glycol mono-n-butyl ether, tripropylene glycol monomethyl ether, and tripropylene glycol monoethyl ether; (poly)alkylene glycol monoalkyl ether acetates such as ethylene glycol monomethyl ether acetate, ethylene glycol monoethyl ether acetate, diethylene glycol monomethyl ether acetate, diethylene glycol monoethyl ether acetate, propylene glycol monomethyl ether acetate, and propylene glycol monoethyl ether acetate; other ethers such as diethylene glycol dimethyl ether, diethylene glycol methylethyl ether, diethylene glycol diethyl ether, and tetrahydrofuran; ketones such as methyl ethyl ketone, cyclohexanone, 2-heptanone, and 3-heptanone; alkyl lactates such as methyl 2-hydroxypropionate and ethyl 2-hydroxypropionate; other esters such as ethyl 2-hydroxy-2-methylpropionate, methyl 3-methoxypropionate, ethyl 3-methoxypropionate, methyl 3-ethoxypropionate, ethyl 3-ethoxypropionate, ethyl ethoxyacetate, ethyl hydroxyacetate, methyl 2-hydroxy-3-methylbutanoate, 3-methoxybutyl acetate, 3-methyl-3-methoxybutyl acetate, 3-methyl-3-methoxybutyl propionate, ethyl acetate, n-propyl acetate, isopropyl acetate, n-butyl acetate, isobutyl acetate, n-pentyl formate, isopentyl acetate, n-butyl propionate, ethyl butyrate, n-propyl butyrate, isopropyl butyrate, n-butyl butyrate, methyl pyruvate, ethyl pyruvate, n-propyl pyruvate, methyl acetoacetate, ethyl acetoacetate, and ethyl 2-oxobutanoate; aromatic hydrocarbons such as toluene and xylene; and amides such as N-methylpyrrolidone, N,N-dimethylformamide, and N,N-dimethylacetoamide.

### <Other component>

The photocurable liquid composition may include various additives conventionally used in photosensitive compositions and ink compositions in addition to the components described above as long as the objective of the present invention is not impaired. Examples of the preferred additives for use in the photocurable liquid composition include a dispersant, an adhesion promoter such as a silane coupling agent, an antioxidant, an anti-cohesion agent, a defoamer, a surfactant, and the like. The surfactant is not particularly limited, and known components such as fluoro-surfactants and silicone-surfactants can be used.

### <Method for producing photocurable liquid composition>

The photocurable liquid composition is obtained by mixing the above-mentioned components in the predetermined quantities and then stirring the mixture uniformly.

### <<Method for producing cured product>>

The photosensitive ink composition described above, typically gives the cured product by a method comprising, shaping the photocurable liquid composition according to the shape of the cured product to be formed, and exposing the shaped photocurable liquid composition.

For example, the cured product produced by the above method preferably has a refractive index of 1.60 or higher, more preferably 1.61 or higher, and even more preferably 1.62 or higher at a wavelength of 550 nm. Therefore, the cured product with such a high refractive index, produced by the above method, is suitably used in optical applications where a high refractive index is required. For example, a film consisting of the cured product of the aforementioned photocurable liquid composition is suitably used as a high refractive index film composing an anti-reflective film and the like in various display panels, such as an organic EL display panel and a liquid crystal display panel.

A thickness of the high refractive index film consisting of the cured product of the aforementioned photocurable liquid composition is not particularly limited, and is selected according to application. Typically, the thickness of the high refractive index film is preferably 1 nm or more and 20 um or less, and more preferably 50 nm or more and 10 um or less.

The method of shaping the photocurable liquid composition is not particularly limited and is selected according to the shape of the cured product. The shape of the cured product includes, but is not limited to, a film shape, a lens shape, a line shape, a prism shape, and the like. Among these shapes, the film shape is preferred. The method of shaping the photocurable liquid composition is not particularly limited. When the shape of the cured product is the lens shape, the prism shape, or the like, the photocurable liquid composition may be filled into a mould according to the shape of the cured product using a squeegee and the like. When the shape of the cured product is the line shape and the like, the photocurable liquid composition should be applied on the substrate according to the shape of the cured product. As an application method, for example, printing, such as an inkjet method is exemplified. Examples of the method of applying the cured product in the film shape include methods in which a contact transfer-type applicator such as a roll coater, a reverse coater or a bar coater, and a non-contact type applicator such as a spinner (a rotary applicator), or a curtain flow coater are used. The photocurable liquid composition can also be applied in the form of a film by printing methods such as an inkjet method.

When the photocurable liquid composition includes the solvent (S), the solvent (S) may be removed from the photocurable liquid composition by a method of heating and the like, after shaping the photocurable liquid composition into the desired shape.

For example, after exposure to the photocurable liquid composition shaped into a desired shape, such as a film shape, so that the photocurable liquid composition is not completely cured, it may be shaped to the semi-cured photocurable liquid composition by methods such as imprinting. In this case, the shaped semi-cured photocurable liquid composition is further exposed, and the photocurable liquid composition is sufficiently cured to the desired degree. The aforementioned photocurable liquid composition may also be applied to the 3D printing method to form a cured product of the desired shape by layering a thin film of cured product through repeated inkjet printing and curing by exposure.

As for the exposure method for curing the photocurable liquid composition shaped by the above method, various methods known as curing methods for photosensitive compositions can be applied accordingly. Exposure to the shaped photocurable liquid composition is carried out, for example, by irradiating with active energy rays such as ultraviolet light and excimer laser light.

Exposure to the shaped photocurable liquid composition may be regioselectively carried out, for example by method of exposing through a mask. When the exposure is regioselectively carried out, the patterned cured product is formed by developing the exposed photocurable liquid composition using an organic solvent to remove unexposed areas. When a development process is carried out, it is preferable to remove the developing solution sufficiently after the development, e.g. by drying with heat.

According to the above-described method, the cured product having desired shape and high refractive index can be formed by using the above-described photocurable liquid composition including no or little solvent (S).

### EXAMPLES

Hereinafter, the present invention is described in more detail by way of Examples, but the present invention is not limited to these Examples.

### [Examples 1 to 10 and Comparative Example 1]

In Examples and Comparative Example, following compounds was used as the photopolymerizable monomer (A).

### <Monofunctional monomer (A1)>

A1-a: Dipentaerythrythol hexaacrylate
A1-b: Compound of following formula

   CH=CH₂-CO-O-CH₂CH₂CH₂-O-CH₂)₂-CH-O-CH₂CH₂CH₂-O-CO-CH=CH₂
A1-c: Trimethylolpropane triacrylate

### <Bifunctional monomer (A2)>

A2-a: Compound having following structure

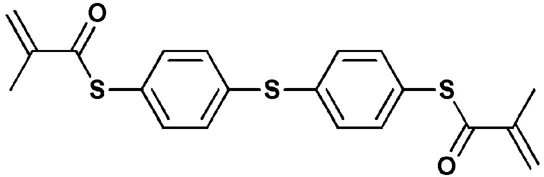

### <Monofunctional monomer (A3)>

### A3-a: Phenethyl acrylate

In Examples and Comparative Example, as the capping agent, zirconium oxide particles B1 (average particle diameter: 8 nm) which are surface-modified with 3-methacryloxypropyltrimethoxy silane, zirconium oxide particles B2 (average particle diameter: 10 nm) which are not surface-modified with an ethylenically unsaturated double bond-containing capping agent, titanium oxide particles B3 (average particle diameter: 11 nm) which are surface-modified with 3-methacryloxypropyltrimethoxy silane, and titanium oxide particles B4 (average particle diameter: 10 nm) which are not surface-modified with an ethylenically unsaturated double bond-containing capping agent were used as the metal oxide nanoparticles (B) were used. The zirconium oxide particles B2 were obtained by drying nanocrystals collected by centrifuge according to the method described in paragraph [0223] of Japanese Unexamined Patent Application, Publication No. 2018-193481. The zirconium oxide particles surface-modified with 3-methacryloxypropyltrimethoxy silane were obtained in the same manner as for the zirconium oxide particles B2 except that 3-methacryloxypropyltrimethoxysilane was added as a capping agent at a mass of 0.8-1.5 times the mass of the zirconium oxide particles in a step of adding the capping agent. The titanium oxide particles B4 were obtained by drying nanocrystals collected by centrifuge according to the method described in Example 8 of International Publication No. 2020/106860. The titanium oxide particles B3 surface-modified with 3-methacryloxypropyltrimethoxy silane were obtained in the same manner for the titanium oxide particles B4 except that 50 % by mass of the capping agent was replaced with 3-methacryloxypropyltrimethoxy silane in a step of adding the capping agent.

In Examples and Comparative Example, bis(2,4,6-trimethylbenzoyl)-phenylphosphineoxide was used as the photopolymerization initiator (C).

The photopolymerizable monomer (A) of type shown in Table 1 in an amount (parts by mass) show in Table 1, the metal oxide nanoparticles (B) of type shown in Table 1 in an amount (parts by mass) shown in Table 1, 6.0 parts by mass of the photopolymerization initiator (C), and 1.0 part by mass of the surfactant (BYK-333 (manufactured by manufactured by BYK-Chemie)) were uniformly mixed to obtain the photocurable liquid compositions of Examples 1 to 10 and Comparative Example 1. The photopolymerizable monomer (A) of type shown in Table 3 in an amount (parts by mass) shown in Table 3, the metal oxide nanoparticles (B) of type shown in Table 3 in an amount (parts by mass) shown in Table 3, 1.0 parts by mass of the photopolymerization initiator (C), and PGMEA (propylene glycol monomethyl ether acetate) as the solvent (S) were uniformly mixed so that a content of components other than the solvent (S) was 10 % by mass to obtain the photocurable liquid compositions of Example 10 and Example 11.

Viscosities of the photocurable liquid compositions measured at 25 °C or 35 °C using the E-type viscometer are shown in Table 2 and Table 3. It should be noted that only viscosities measured at 25 °C are shown in Table 3. In addition, refractive index, light transmittance, haze, and yellowing index (Y. I.) of the cured film formed using the photocurable liquid composition obtained were measured according to following method. These measurement results are shown in Table 2 and Table 3. A ratio T1/T2 which is a ratio of a thickness T1 of a layer richly including the metal oxide nanoparticles and a thickness T2 of a layer where the few metal oxide nanoparticles are present with respect to the cured film formed using the photocurable liquid composition was measured according to following method. The smaller the value of T1/T2, the more localization of the metal oxide nanoparticles (B) in the cured film is suppressed.

### <Method for measuring refractive index>

The photocurable liquid compositions of each of Examples and Comparative Example were applied to a glass substrate using an inkjet system. The coating film was then exposed and cured using a 395 nm UV-LED exposure system with an exposure dose of 2 J/cm² to obtain a cured film of 3 um thickness. The refractive indexes at a wavelength of 550nm of the films were measured using a Metricon prism coupler.

### <Method for measuring total light transmittance, haze, and Y. I.>

Each of photocurable liquid compositions of Examples and Comparative Examples was applied on a glass substrate by spincoating. Thereafter, a coating film was cured by exposure with a 385 nm UV-LED exposure system with an exposure dose of 2 J/cm² to obtain a cured film of 10 um thickness. With respect to the film, total light transmittance, haze and Y. I. were measured with desktop color measurement spectrophotometer manufactured by Hunter Associates Laboratory, inc..

### <Measurement of T1/T2>

With respect to cured films obtained by the same condition as that of the cured film for measurement of refractive index, refractive index of each of cured films was measured by prism-coupling method with Prism Coupler 2010/M manufactured by Metricon Corp. In case that two layers respectively having different refractive indexes with each other were detected, each of the two layers was analyzed, and thickness of each of the layers was obtained. A thickness of an upper layer richly including the metal oxide nanoparticles is T1. A thickness of a lower layer including small amount of the metal oxide nanoparticle is T2. T1/T2 which is a ratio of thicknesses of both layers was calculated based on thus obtained T1 and T2. A value of T1/T2 was used as an evaluation index for the degree of bilayering.

**[Table 1]**

| | Photopolymerizable monomer (A) | | | | | Metal oxide nanoparticles (B) (Type/ Parts by mass) |
|---|---|---|---|---|---|---|
| | Polyfunctional monomer (A1) | | | Bifunctional monomer (A2) | Monofunctional monomer (A3) | |
| | A1-a | A1-b | A1-c | A2-a | A3-a | |
| Example 1 | 7.4 | - | - | 8.3 | 33.3 | B1/44.0 |
| Example 2 | 14.7 | - | - | 8.3 | 26.0 | B1/44.0 |
| Example 3 | 22.1 | - | - | 8.3 | 18.6 | B1/44.0 |
| Example 4 | 29.4 | - | - | 8.3 | 11.3 | B1/44.0 |
| Example 5 | - | 9.3 | - | 9.3 | 27.9 | B1/46.5 |
| Example 6 | - | 18.6 | - | 9.3 | 18.6 | B1/46.5 |
| Example 7 | - | - | 14.7 | 8.3 | 26.0 | B1/44.0 |
| Example 8 | - | - | 22.1 | 8.3 | 18.6 | B1/44.0 |
| Example 9 | - | - | 29.4 | 8.3 | 11.3 | B1/44.0 |
| Example 10 | 7.4 | - | - | 8.3 | 33.3 | B2/44.0 |
| Comparative Example 1 | - | - | - | 9.3 | 37.2 | B1/46.5 |

**[Table 2]**

| | Viscosity (cP) | | Refractive index 550nm | Total light transmittance (%) | Haze | Y. I. | T1/ T2 |
|---|---|---|---|---|---|---|---|
| | 25 °C | 35 °C | | | | | |
| Example 1 | 42.4 | 28.0 | 1.627 | 97.0 | 0.02 | 0.63 | 0.19 |
| Example 2 | 98.4 | 58.1 | 1.631 | 97.3 | 0.02 | 0.65 | 0.12 |
| Example 3 | 267.9 | 140.2 | 1.616 | 97.6 | 0.00 | 0.69 | 0.00 |
| Example 4 | 1010.0 | 439.2 | 1.625 | 96.8 | 0.02 | 1.74 | 0.00 |
| Example 5 | 47.6 | 30.2 | 1.625 | 89.8 | 0.04 | 0.82 | 0.14 |
| Example 6 | 94.4 | 54.4 | 1.625 | 90.1 | 0.03 | 0.88 | 0.14 |
| Example 7 | 39.6 | 25.1 | 1.620 | 96.7 | 0.00 | 0.75 | 0.13 |
| Example 8 | 55.6 | 33.2 | 1.636 | 97.1 | 0.00 | 0.43 | 0.10 |
| Example 9 | 84.4 | 48.2 | 1.626 | 96.9 | 0.00 | 0.49 | 0.06 |
| Example 10 | 43.4 | 28.2 | 1.619 | 96.8 | 0.18 | 1.80 | 0.20 |
| Comparative Example 1 | 29.3 | 20.3 | 1.622 | 96.5 | 0.05 | 0.88 | 0.26 |

**[Table 3]**

| | Photopolymerizable Monomer (A) | Metal oxide nanoparticles (B) (Type/ Parts by mass) | Evaluation results | | | | | |
|---|---|---|---|---|---|---|---|---|
| | Polyfunctional monomer (A1) A1-c | | Viscosity 25 °C | Refractive index 550nm | Total light transmittance (%) | Haze | Y. I. | T1/ T2 |
| Example 11 | 8 | B3/ 91.0 | 3cp | 1.958 | 92.8 | 0.00 | 10.1 | 0.00 |
| Example 12 | 8 | B4/ 91.0 | 4cp | 1.944 | 91.2 | 0.00 | 11.2 | 0.00 |

According to Table 1, Table 2, and Table 3, it is found that the value of T1/T2 was decreased, and localization of the metal oxide nanoparticles (B) in the cured product was suppressed by adding the polyfunctional monomer (A1) which meets the aforementioned predetermined requirements to the photocurable liquid composition including the photopolymerizable monomer (A), the metal oxide nanoparticles (B), and the photopolymerization initiator (C). In addition, it is found that various optical properties such as refractive index, total light transmittance, haze, and Y. I. by surface-modification of the surface of the metal oxide nanoparticles (B) with the ethylenically unsaturated double bond-containing group.

## Claims

1. A photocurable liquid composition comprising a photopolymerizable monomer (A), metal oxide nanoparticles (B), and a photopolymerization initiator (C),
wherein the photopolymerizable monomer (A) has an ethylenically unsaturated double bond, and
the photopolymerizable monomer (A) comprises a polyfunctional monomer (A1) having 3 or more ethylenically unsaturated double bonds.

2. The photocurable liquid composition according to claim 1, wherein surfaces or the metal oxide nanoparticles (B) are modified with an ethylenically unsaturated double bond-containing group.

3. The photocurable liquid composition according to claim 1 or 2, wherein the polyfunctional monomer (A1) is an aliphatic compound having no aromatic group.

4. The photocurable liquid composition according to any one of claims 1 to 3, wherein a number of the ethylenically unsaturated double bonds possessed by the polyfunctional monomer (A1) is 3 or more and 6 or less.

5. The photocurable liquid composition according to any one of claims 1 to 4,
wherein the polyfunctional monomer (A1) is a compound represented by following formula (A1): 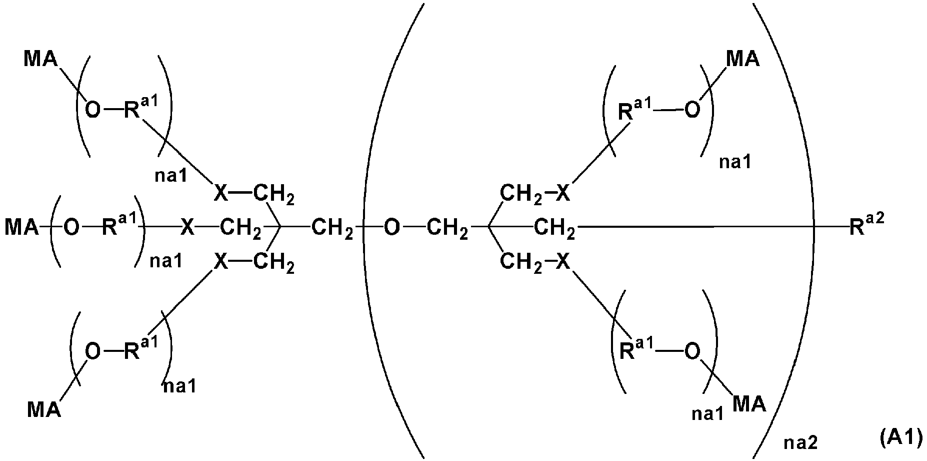
(MA-(O-R^{a1})ₙₐ₁-X-CH₂)₂-CH-X-(R^{a1}-O)ₙₐ₁-MA (A2)
wherein, in the formula (A1) and the formular (A2), MAs are each independently (meth)acryloyl group, Xs are each independently oxygen atom -NH-, or -N(CH₃)-, R^{a1}s are each independently ethane-1,2-diyl group, propane-1,2-diyl group, or propane-1,3-diyl group, R^{a2} is a hydroxy group, an alkyl group having 1 or more and 4 or less carbon atoms, or a group represented by -X-(R^{a1}-O)ₙₐ₁-MA (in which X is the same as the above), and na1 and na2 are each independently 0 or 1.

6. The photocurable liquid composition according to any one of claims 1 to 5, wherein a ratio of the polyfunctional monomer (A1) is 20 % by mass or more and 70 % by mass or less relative to a mass of the photopolymerizable monomer (A).

7. The photocurable liquid composition according to any one of claims 1 to 6,
wherein the photopolymerizable monomer (A) comprises a compound represented by following formula (a-1):
wherein, in the formula (a-1), R¹ and R² are each independently hydrogen atom or methyl group, R³ and R⁴ are each independently an alkyl group having 1 or more and 5 or less carbon atoms,
and p and q are each independently 0 or 1, as the bifunctional monomer (A2).

8. The photocurable liquid composition according to any one of claims 1 to 7, wherein the photopolymerization initiator (C) comprises a phosphine oxide compound.

9. A cured product of the photocurable liquid composition according to any one of claims 1 to 8.

10. The cured product according to claim 9, wherein a refractive index measured at a wavelength of 550 nm is 1.60 or higher.

11. A Method for producing a cured product comprising:
shaping the photocurable liquid composition according to any one of claims 1 to 8, and exposing the shaped photocurable liquid composition.

12. The method for producing the cured product according to claim 11, wherein a method for forming the photocurable liquid composition is application.
